# EUROPEAN PATENT APPLICATION

(11) **EP 2 408 236 A1**
(43) Date of publication of application: **18.01.2012**
(21) Application number: 10750829.3
(22) Date of filing: 09.03.2010
(51) Int. Cl.: H04W 48/20, H04W 48/08

(54) **WIRELESS COMMUNICATION SYSTEM, BASE STATION APPARATUS, WIRELESS COMMUNICATION TERMINAL, GATEWAY APPARATUS AND COMMUNICATION METHOD**

(30) Priority: 13.03.2009 JP 2009061719
(71) Applicant: NEC Corporation, Tokyo 108-8001 (JP)
(72) Inventor: NAKATA, Atsushi, Tokyo 108-8001 (JP); HAYASHI, Sadafuku, Tokyo 108-8001 (JP)
(74) Representative: MacDougall, Alan John Shaw
(86) International application number: PCT/JP2010/053897
(87) International publication number: WO 2010/104076

(57) **Abstract**

A radio communication system according to the present invention includes a base station device and a radio communication terminal. The radio communication terminal selects a cell of the base station device or a cell group to which the cell belongs and transmits information, that denotes that the cell or the cell group has been selected, to the base station device. The base station device receives the information.

## Description

### TECHNICAL FIELD

The present invention relates to a radio communication system, a base station device, a radio communication terminal, a gateway device, and communication method.

### BACKGROUND ART

In a radio communication system, sometimes a user who uses a UE (User Equipment) manually selects the name assigned to a cell (for example, HNB Name) or a closed subscriber group(hereinafter, CSG: Closed Subscriber Group) assigned to the cell. In this case, the HNB Name is text or the like with which the user can easily recognize the CSG ID and when the user selects it, the UE internally interprets the selection of the text as the selection of the corresponding CSG ID.

The user can manually select a CSG regardless of whether or not it is contained in a CSG list that contains those permitted for the UE that he or sheuses (hereinafter, this CSG list is referred to as the Allowed CSG List).

If the user selects a CSG that is not contained in the Allowed CSG List that contains those permitted for the UE and then the UE tries to make connection to a Core Network Node, during the connection procedure, the UE can communicate with the Core Network Node connected to a database with respect to access control for the UE and will receive a connection completion notification message from the Core Network Node so as to perform an update procedure that appends the CSG to the Allowed CSG List (refer to Non-patent Literature 1).

However, before the UE starts making connection to the Core Network Node, the UE needs to perform an RRC Connection establishment procedure for an H(e)NB (Home NB or Home eNB), perform a UE Registration procedure with an H(e)NB GW (Home NB GW or Home eNB GW), and then try to make connection with the Core Network Node. However, the H(e)NB also needs to perform an access control procedure for the UE so as to determine whether or not to establish the RRC connection, whereas the H(e)NB GW also needs to perform the access control procedure for the UE (refer to Non-patent Literature 2).

### RELATED ART LITERATURE

### NON-PATENT LITERATURE

Non-patent Literature 1: TS 25.304.8.3.0
Non-patent Literature 2: TS 25.469 1.0.0

### SUMMARY OF THE INVENTION

### PROBLEM TO BE SOLVED BY THE INVENTION

However, for example, if the user manually selects a CSG that is not contained in the Allowed CSG List that contains those permitted for the UE and then the UE tries to make connection to the Core Network Node for a cell assigned to the relevant CSG, a problem in which the connection is rejected by the H(e)NB and H(e)NB GW that are intermediate nodes that are present between the UE and the Core Network Node occurs. As a result, a very serious problem in which the UE cannot cause the selected CSG to be appended to the Allowed CSG List of the UE and also cannot make connection to the Core Network Node occurs.

This problem results from the fact that the network side does not have a means to know that the user of the UE has selected either the name assigned to a cell or a closed subscriber group.

Therefore, an object of the present invention is to provide a radio communication system, a base station device, a radio communication terminal, a gateway device, and a communication method that allow the network side including the H(e)NB to know that the user of the UE has selected either the name assigned to a cell or a closed subscriber group.

### MEANS THAT SOLVE THE PROBLEM

A radio communication system according to the present invention includes:
a base station device and a radio communication terminal,
wherein said radio communication terminal selects a cell of said base station device or a cell group to which the cell belongs, and
transmits information, that denotes that said cell or said cell group has been selected, to said base station device, and
wherein said base station device receives said information.

A base station device according to the present invention includes:
a reception unit that receives information that denotes that a cell of said base station device or a cell group to which said cell belongs has been selected by a radio communication terminal therefrom.

A radio communication terminal according to the present invention includes:
a selection unit that selects a cell of a base station device or a cell group to which said cell belongs; and
a transmission unit that transmits information, that denotes that said cell or said cell group has been selected, to said base station device.

A gateway device according to the present invention according to the present invention includes:
a reception unit that receives information that denotes that a cell of said base station device or a cell group to which said cell belongs has been selected by a radio communication terminal therefrom.

A first communication method according to the present invention is a communication method of a radio communication system a base station device and a radio communication terminal including:
causing said radio communication terminal to select a cell of said base station device or a cell group to which the cell belongs;
causing said radio communication terminal to transmit information that denotes that said cell or said cell group has been selected to said base station device; and
causing said base station device to receive said information.

A second communication method according to the present invention is a communication method of a base station device including:
receiving information that denotes that a cell of said base station device or a cell group to which said cell belongs has been selected by a radio communication terminal therefrom.

A third communication method according to the present invention is a communication method of a radio communication terminal including:
selecting a cell of a base station device or a cell group to which said cell belongs; and
transmitting information that denotes that said cell or said cell group has been selected to said base station device.

A forth communication method according to the present invention is a communication method of a gateway device including:
receiving information that denotes that a cell of said base station device or a cell group to which said cell belongs has been selected by a radio communication terminal therefrom.

### EFFECT OF THE INVENTION

According to the radio communication system of the present invention, a radio communication terminal transmits information, that denotes that a cell or a cell group to which the cell belongs has been selected, to the base station device and the base station device receives the information.

Thus, an effect in which the radio communication terminal can notify the base station device that a cell or a cell group has been selected can be obtained.

### BRIEF DESCRIPTION OF DRAWINGS

[Fig. 1] is a schematic diagram showing the structure of a UE.
[Fig. 2] is a schematic diagram showing the structure of an NB.
[Fig. 3] is a schematic diagram showing the structure of a GW.
[Fig. 4] is a schematic diagram showing the structure of a radio communication system.
[Fig. 5] is a schematic diagram showing the structure of a UE.
[Fig. 6] is a schematic diagram showing the structure of an H(e)NB.
[Fig. 7] is a schematic diagram showing the structure of an H(e)NB GW.
[Fig. 8] is a schematic diagram showing the structure of a Core Network Node.
[Fig. 9] is a schematic diagram showing the relationship of connections between an external server containing UE-CSG relationship registration data and the Core Network Node.
[Fig. 10] is a diagram showing the structure of a UE black list memory.
[Fig. 11] is a sequence diagram describing the operation of a connection request manually selected by the user.
[Fig. 12] is a diagram showing an RRC CONNECTION REQUEST message to which a new parameter "Manual CSG ID Selection" has been set.
[Fig. 13] is a sequence diagram describing a transmission operation of an RRC Request message having an "Establishment Cause."
[Fig. 14] is a diagram showing the RRC Connection Request message or RRC Initial Direct Transfer message in which a new value "Manual CSG ID Selection" has been set to an existing parameter "Establishment Cause."
[Fig. 15] is a sequence diagram describing the transmission operation for an RRC Connection Setup Complete message.
[Fig. 16] is a diagram showing an RRC Connection Setup Complete message to which the new parameter "Manual CSG ID Selection" has been set.
[Fig. 17] is a sequence diagram describing the transmission operation for the RRC Initial Direct Transfer message.
[Fig. 18] is a diagram showing the RRC Initial Direct Transfer message to which a new parameter "Manual CSG ID Selection" has been set.
[Fig. 19] is a schematic diagram describing the transmission operation for an RRC Uplink Direct Transfer (MM: Identity Response) message.
[Fig. 20] is a diagram showing the RRC Uplink Direct Transfer (MM: Identity Response) message to which the new parameter "Manual CSG ID Selection" has been set.
[Fig. 21] is a diagram showing the specifications of the new parameter "Manual CSG ID Selection."
[Fig. 22] is a diagram showing the specifications of the existing parameter "Establishment Cause" of a CS Domain to which the new value "Manual CSG ID Selection" has been set.
[Fig. 23] is a diagram showing the specifications of the existing parameter "Establishment Cause" of a PS Domain to which the new value "Manual CSG ID Selection" has been set.
[Fig. 24] is a sequence diagram describing the transmission operation for an HNBAP UE Register Request message having a "Register Cause."
[Fig. 25] is a flow chart describing the operation of access control in the H(e)NB.
[Fig. 26] is a flow chart describing the operation of access control in the H(e)NB GW.
[Fig. 27] is a flow chart describing the registration and deletion operations for a UE black list in the H(e)NB and H(e)NB GW.
[Fig. 28] is a flow chart describing the connection target reconfiguration operation for a UE connected to the H(e)NB GW and H(e)NB.
[Fig. 29] is a schematic diagram showing another structure of the radio communication system.

### BEST MODES THAT CARRY OUT THE INVENTION

First, the present invention will be outlined.

According to the present invention, if the user manually selects a CSG on a UE, UE transmits a connection request message, to which a parameter or a cause value that denotes that a connection request has been issued for the CSG that the user has manually selected has been set, to the H(e)NB. Then, the H(e)NB transmits a UE Register Request message, to which the parameter or cause value that denotes that the connection request has been issued for the CSG that the user has manually selected has been set, to the H(e)NB GW.

Thus, the access control by the H(e)NB and H(e)NB GW for the UE that has issued the manually selected connection request can be invalidated. As a result, it can be expected that a later connection procedure with the Core Network Node that manages the Allowed CSG List will succeed and thereby an update procedure that adds the CSG to the Allowed CSG List can be accomplished.

However, if the access control by the H(e)NB and H(e)NB GW is invalidated, the access control for the UE can be performed only by the Core Network Node. In this case, even if the access control for the UE fails due to illegality, installation mistake, or the like, the manually selected connection request can be repeatedly issued from the UE. In this case, the access control by the H(e)NB and H(e)NB GW cannot be rejected and thereby the load for the access control process in the Core Network Node increases. If many UEs issue such connection requests, the load in the Core Network Node excessively increases and thereby a system failure may occur.

To prevent this from occurring, according to the present invention, UEs that are not permitted to be connected by the access control for UEs by the Core Network Node are registered in UE black lists stored in the H(e)NB and H(e)NB GW. If a UE that issues a connection request message has been registered in the UE black list, the H(e)NB and H(e)NB GW perform the access control such that they reject the connection request message that the UE issues.

Thus, if a UE that has illegality or installation mistake issues a manually selected connection request, the access control by the H(e)NB and H(e)NB GW can be still validated. As a result, the load for the access control process for the UE in the Core Network Node can be decreased.

However, if the area that the H(e)NB and H(e)NB GW manage is large or the H(e)NB and H(e)NB GW are disposed at a location where many users gather, it can be expected that there are many UEs that are registered in the black list. As a result, it is likely that an increase of the memory area will cause the memory to become insufficient and an increase of the load for the process will cause the process capacity to become insufficient. In addition, if there are so many such UEs, it is likely that as a result of the effects of increases of the loads for the memories and processes of the H(e)NB and H(e)NB GW, their excessive loads will cause a system failure.

Thus, according to the present invention, for the access control by the H(e)NB and H(e)NB GW, individual UE expiration timers and a maximum registrable UE number are set to the UE black lists stored in the H(e)NB and H(e)NB GW. When the expiration timer for each UE runs out, the UE is deleted from the black list. If UEs of the maximum number have been registered in the black list, the oldest UE is deleted from the black list and the newest UE is registered thereto.

Thus, usage of the memories of the H(e)NB and H(e)NB GW can be saved and the loads for their processes can be decreased. In addition, if an UE that has an installation mistake is repaired, the UE can be prevented from forever being registered in the black list. Moreover, if the user manually selects an erroneous CSG for the UE, it can be prevented from forever being registered in the black list.

Moreover, according to the present invention, in the reallocation process for the connection control, the H(e)NB and H(e)NB GW will cause a UE to stay in a cell of the CSG that the user has selected or will permit the UE to enter a neighboring cell having the same CSG ID as the cell of the selected CSG.

Thus, since the UE can be connected to a CSG that the user desires, the UE can be prevented from entering a CSG or a macrocell that the user does not desire and thereby from staying in such a CSG or macrocell.

Moreover, according to the present invention, if the user manually selects a macrocell and the UE issues a connection request to an RNC through a Node B or an eNB, the UE notifies the RNC or eNB that that connection request has been issued to the macrocell that the user has manually selected. Moreover, in the reallocation process for the connection control, the Node B and RNC or eNB permit the UE to stay in the macrocell that the user has selected or enter another macrocell that neighbors the macrocell that the user has selected.

Thus, since the UE can be connected to a macrocell that the user desires rather than a femtocell of a CSG that he or she does not desire, the UE can be prevented from entering the H(e)NB of the CSG and thereby from staying in a femtocell of the H(e)NB of that CSG that is different from the macrocell that the user desires.

Next, with reference to the drawings, embodiments of the present invention will be described.

### (First Embodiment)

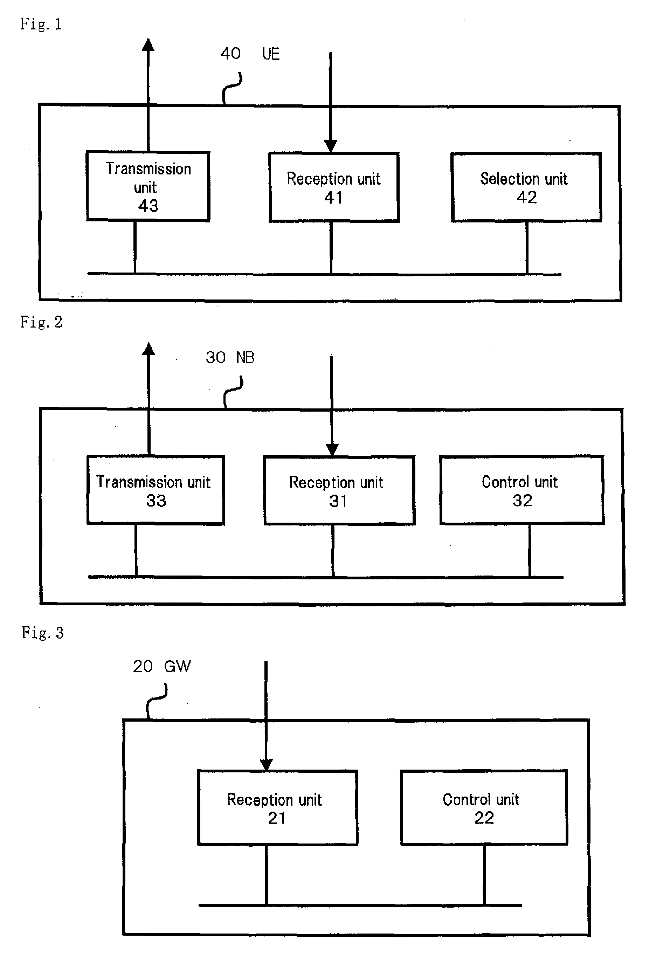

Fig. 1, Fig. 2, and Fig. 3 respectively show the structures of UE 40, NB 30, and GW 20 according to a first embodiment of the present invention.

As shown in Fig. 1, radio communication terminal (UE: User Equipment) 40 has reception unit 41 that receives information with respect to a cell of a base station device, selection unit 42 that selects information with respect to the cell (namely, information assigned to the cell), and transmission unit 43 that transmits information that represents the selection of the information with respect to the cell to base station device (NB: Node-B) 30.

On the other hand, as shown in Fig. 2, NB 30 has reception unit 31 that receives the information that represents the selection of the information with respect to the cell from UE 40 and control unit 32 that permits UE 40 to access NB 30 based on the received information that represents the selection of the information with respect to the cell. NB 30 may also have transmission unit 33 that transmits the received information that represents the selection of the information with respect to the cell, which has been received by reception unit 31, to gateway device (GW) 20.

On the other hand, as shown in Fig. 3, GW 20 has reception unit 21 that receives the information that represents the selection of the information with respect to the cell from NB 30 and control unit 22 that permits UE 40 to access GW 20 based on the received information that represents the selection of the information with respect to the cell.

Thus, according to this embodiment, UE 40 can notify NB 30 or UE 40 of the information that represents the selection of the information with respect to the cell.

The information with respect to the cell is information that identifies a cell or that represents its attributes, for example, a CSG, a CSG ID, or an HNB Name of the cell.

### (Second Embodiment)

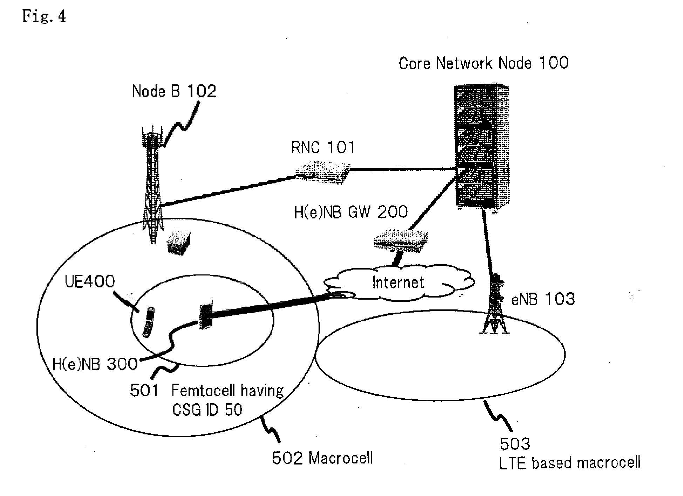

Referring to Fig. 4, the structure of the radio communication system according to this embodiment is presented.

In Fig. 4, the radio communication system has Core Network Node 100, RNC 101, Node B 102, eNB 103, H(e)NB GW 200, H(e)NB 300, and UE 400.

Core Network Node 100 is connected to RNC 101, eNB 103, and H(e)NB GW 200.

RNC 101 is connected to Node B 102.

Node B 102 composes macrocell 502.

eNB 103 composes LTE based macrocell 503.

H(e)NB GW 200 is connected to H(e)NB 300 through the Internet.

H(e)NB 300 composes femtocell 501 having CSG ID 50.

When necessary, UE 400 selects macrocell 502 or femtocell 501.

If macrocell 501 is selected, UE 400 and Core Network Node 100 are connected through Node B 102 and RNC 101; if LTE based macrocell 503 is selected, UE 400 and Core Network Node 100 are connected through eNB 103; if femtocell 501 is selected, UE 400 and Core Network Node 100 are connected through H(e)NB 300 and H(e)NB GW 200.

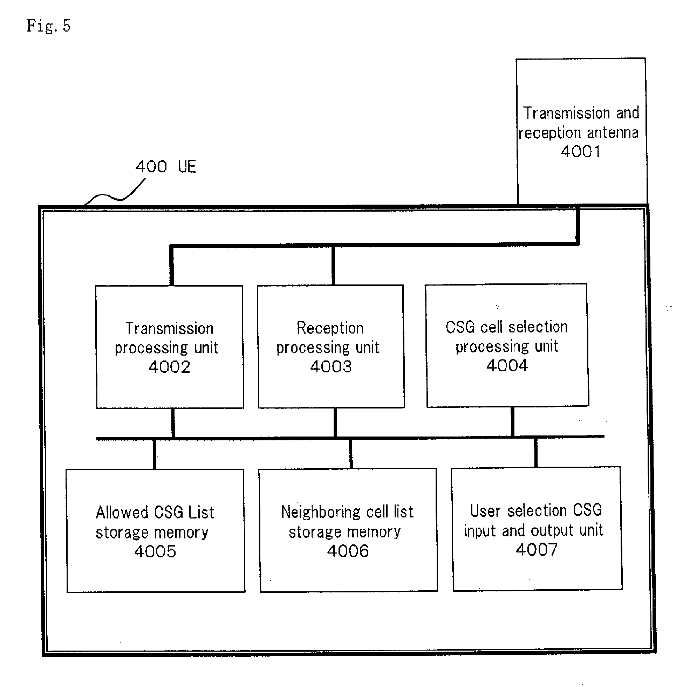

Referring to Fig. 5, the detailed structure of UE 400 shown in Fig. 4 is presented.

In Fig. 5, UE 400 has transmission and reception antenna 4001, transmission processing unit 4002, reception processing unit 4003, CSG cell selection processing unit 4004, Allowed CSG List storage memory 4005, neighboring cell list storage memory 4006, and user selection CSG input and output unit 4007.

Transmission and reception antenna 4001 obtains system information of neighboring macrocells and femtocells and reception processing unit 4003 performs a reception process. Neighboring cell list storage memory 4006 stores CSG IDs of the individual neighboring femtocells and information about the individual neighboring macrocells.

In an automatic selection mode, CSG cell selection processing unit 4004 selects at least one appropriate femtocell or macrocell having the same CSG ID as that stored in Allowed CSG List storage memory 4005 from neighboring cell list storage memory 4006.

By contrast, in a manual selection mode, neighboring cell list storage memory 4006 outputs femtocells having CSG IDs to user selection CSG input and output unit 4007 regardless of the contents of Allowed CSG List storage memory 4005. Then, CSG cell selection processing unit 4004 obtains a CSG ID that the user has selected from user selection CSG input and output unit 4007 and selects a femtocell having the CSG ID that the user has selected. The information with respect to the selected cell is transmitted as a connection request message (hereinafter referred to as the RRC Connection Request message) to H(e)NB 300 through transmission processing unit 4002 and transmission and reception antenna unit 4001.

One feature of the present invention is in that the RRC Connection Request message transmitted from UE 400 to H(e)NB 300 denotes that the user has manually selected a CSG (hereinafter referred to as the Manual CSG ID Selection parameter setup).

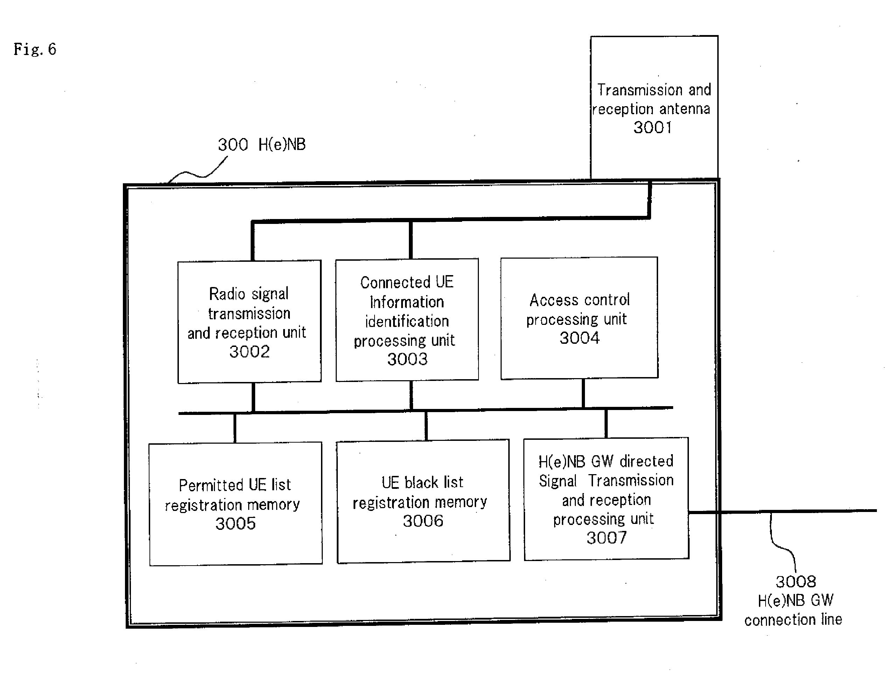

Referring to Fig. 6, the detailed structure of H(e)NB 300 shown in Fig. 4 is presented.

In Fig. 6, H(e)NB 300 has transmission and reception antenna 3001, radio signal transmission and reception unit 3002, connected UE information identification processing unit 3003, access control processing unit 3004, permitted UE list registration memory 3005, UE black list registration memory 3006, H(e)NB GW directed signal transmission and reception processing unit 3007, and H(e)NB GW connection line 3008.

Radio signal transmission and reception unit 3002 receives the message transmitted from UE 400 through transmission and reception antenna 3001. When radio signal transmission and reception unit 3002 receives the message, connected UE information identification processing unit 3003 identifies UE 40 that has transmitted the message. As a method that identifies UE 400, IMSI (International Mobile Subscribed Identify), TMSI (Temporary Mobile Subscriber Identify), P-TMSI (Packet-TMSI), or IMEI (International Mobile Equipment Identity) can be used.

One feature of the present invention is in that UE 400 sets the Manual CSG ID Selection parameter that denotes that the user has manually selected a CSG to the RRC Connection Request message.

If the Manual CSG ID Selection parameter has not been set to the RRC Connection Request message received from UE 400, access control processing unit 3004 determines whether or not UE 400 has been registered in permitted UE list registration memory 3005 and, if UE 400 has been registered in permitted UE list registration memory 3005, access control processing unit 3004 permits the connection for UE 400.

If the Manual CSG ID Selection parameter has been set to the RRC Connection Request message received from UE 400, access control processing unit 3004 determines whether or not UE 400 has been registered in UE black list registration memory 3006 that is one feature of the present invention, and if UE 400 has not been registered, access control processing unit 3004 permits the connection for UE 400.

If the connection for UE 400 is permitted, H(e)NB GW directed signal transmission and reception processing unit 3007 transmits a registration request message for UE 400 (hereinafter referred to as the HNBAP UE Register Request message) through H(e)NB GW connection line 3008.

One feature of the present invention is in that if the user has manually selected a CSG, H(e)NB 300 causes information that denotes that the user has manually selected a CSG (hereinafter, referred to as the Manual CSG ID Selection parameter setup) to be set to the HNBAP: UE Register Request message that is transmitted.

If a response to the HNBAP: UE Register Request message (hereinafter, this response is referred to as the HNBAP: UE Register Response message) received from H(e)NB GW connection line 3008 denotes that UE 400 has been successfully registered, H(e)NB GW directed signal transmission and reception processing unit 3007 transmits an RANAP: Initial UE message to Core Network Node 100 through H(e)NB GW 200.

Since the structures of the individual units shown in Fig. 6 other than UE black list registration memory 3006, the access control process performed by access control processing unit 3004 using UE black list registration memory 3006, and the Manual CSG ID Selection parameter setup in the HNBAP: UE Register Request message are well known by those in the art, they do not directly relate to the present invention.

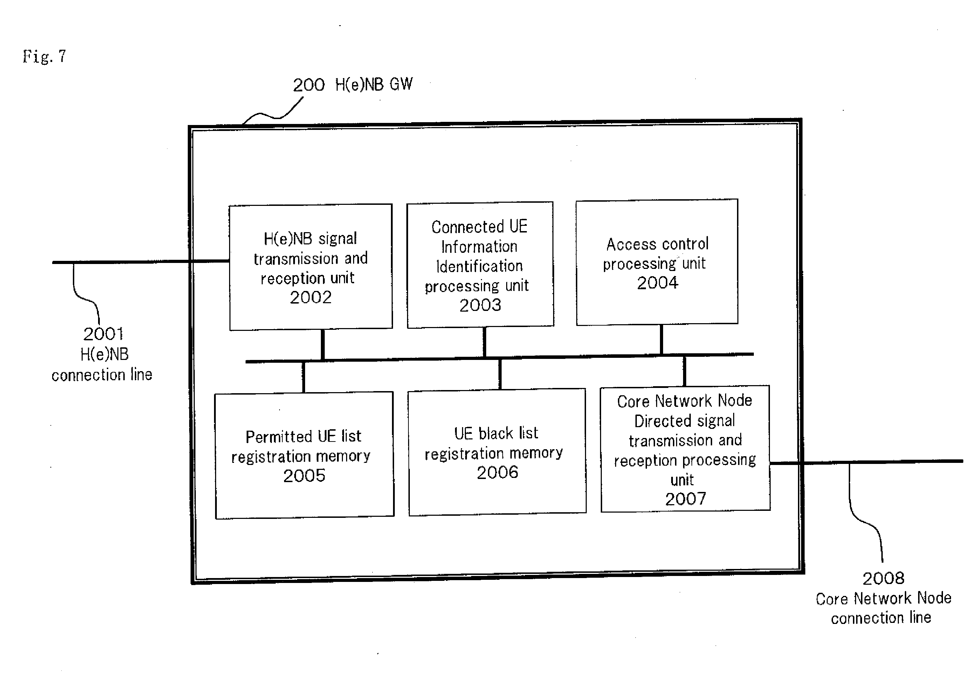

Referring to Fig. 7, the detailed structure of H(e)NB GW 200 shown in Fig.4 is presented.

In Fig. 7, H(e)NB GW 200 includes H(e)NB connection line 2001, H(e)NB signal transmission and reception unit 2002, connected UE information identification processing unit 2003, access control processing unit 2004, permitted UE list registration memory 2005, UE black list registration memory 2006, Core Network Node directed signal transmission and reception processing unit 2007, and Core Network Node connection line 2008.

If H(e)NB signal transmission and reception unit 2002 receives the HNBAP: UE Register Request message from H(e)NB 300 through H(e)NB connection line 2001, connected UE information identification processing unit 2003 identifies UE 400 that has transmitted the HNBAP: UE Register Request message. As amethod that identifies UE 400, IMSI, TMSI, P-TMSI, or IMEI of the UE can be used.

One feature of the present invention is in that the Manual CSG ID Selection parameter that denotes that the user has manually selected a CSG is set to the HNBAP: UE Register Request message.

If the Manual CSG ID Selection parameter has not been set to the HNBAP: UE Register Request message, control processing unit 2004 determines whether or not UE 400 has been registered in permitted UE list registration memory 2005 and if UE 400 has been registered in permitted UE list registration memory 2005, access control processing unit 2004 permits the connection for UE 400.

If the Manual CSG ID Selection parameter has been set to the HNBAP: UE Register Request message, control processing unit 2004 determines whether or not UE 400 has been registered in UE black list registration memory 2005 that is one feature of the present invention, and if UE 400 has not been registered in UE black list registration memory 2006, control processing unit 2004 permits the connection for UE 400.

If the connection is permitted, H(e)NB signal transmission and reception unit 2002 transmits the HNBAP: UE Register Response message through H(e)NB connection line 2001.

If the connection is not permitted, H(e)NB signal transmission and reception unit 2002 transmits an HNBAP: UE Register Reject message. The rejection reason at that point is a value that denotes that the CSG selected based on Manual CSG ID Selection cannot be used (for example, Selected CSG not Allowed).

Since the structures of the individual units shown in Fig. 7 other than UE black list registration memory 2006, the access control process performed by access control processing unit 2004 using UE black list registration memory 2006, the Manual CSG ID Selection parameter setup determination in the HNBAP: UE Register Request message, and the Selected CSG not allowed setup of the rejection reason value in the HNBAP: UE Register Reject message are well known by those in the art, they do not directly relate to the present invention.

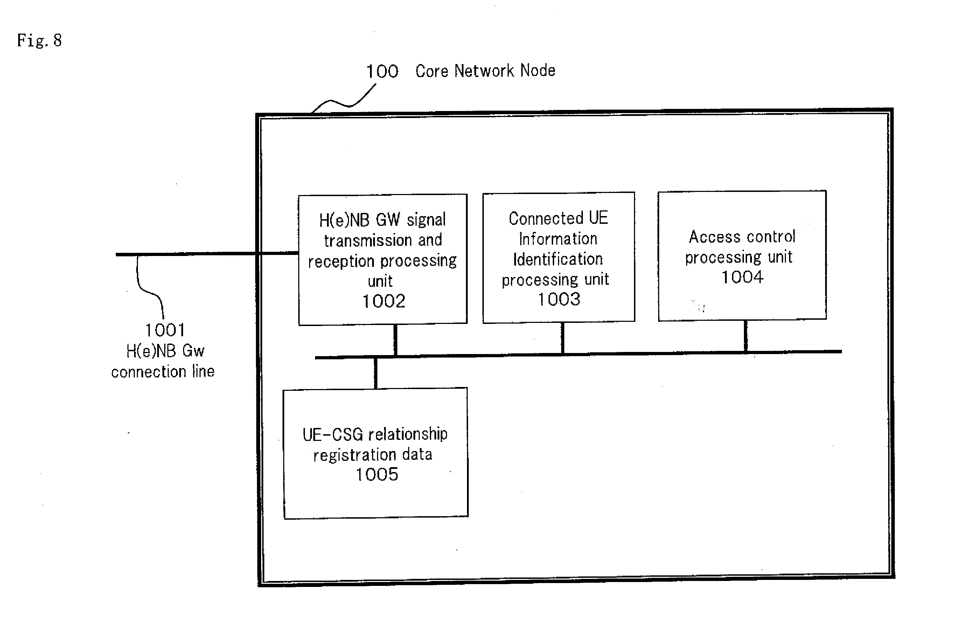

Referring to Fig. 8, the detailed structure of Core Network Node 100 shown in Fig. 4 is presented.

In Fig. 8, Core Network Node 100 includes H(e)NB GW connection line 1001, H(e)NB GW signal transmission and reception processing unit 1002, connected UE information identification processing unit 1003, access control processing unit 1004, and UE-CSG relationship registration data 1005. In Fig. 8, since the structures with respect to the connection of RNC 101 and with respect to the connection of eNB 103 do not directly relate to the present invention, their description is omitted.

If H(e)NB GW signal transmission and reception processing unit 1002 receives the RANAP: Initial UE message, which corresponds to the connection request for UE 400, from H(e)NB 300 through H(e)NB GW 200 and H(e)NB GW connection line 1001, H(e)NB GW signal transmission and reception processing unit 1002 performs a reception process and connected UE information identification processing unit 1003 identifies UE 400. As a method that for identifying UE 400, IMSI, TMSI, P-TMSI, or IMEI of UE 400 can be used.

Access control processing unit 1004 refers to UE-CSG relationship registration data 1005, determines whether or not the area identified by the CSG ID contained in the RANAP: Initial UE message is permitted for UE 400, if so, access control processing unit 1004 permits the connection for UE 400, and if not so, access control processing unit 1004 rejects the connection for UE 400.

When the connection is permitted, as one feature of the present invention, Core Network Node 100 notifies permitted UE list registration memories 3005 and 2005 used in the access control process performed by H(e)NB 300 and H(e)NB GW 200 that the connection for UE 400 is permitted. Core Network Node 100 updates permitted UE list registration memories 3005 and 2005 based on, for example, the TR069 (that is an application layer protocol that serves to remotely control end-user devices).

When the connection is rejected, Core Network Node 100 issues a notification of an RANAP: Iu Release Command that causes a RRC Connection between UE 400 and H(e)NB 300 and a Network Resource between H(e)NB 300 and H(e)NB GW 200 to be released.

As one feature of the present invention, a new value "Selected CSG not allowed" that denotes that the CSG ID that the user has manually selected is invalid is set to an existing parameter "Cause" in the RANAP: Iu Release Command.

Since the structures of the individual units shown in Fig. 8 other than the update processes for permitted UE list registration memory 3005 of he H(e)NB and permitted UE list registration memory 2005 of the H(e)NB GW performed when the connection is permitted and the setup of the "Selected CSG not Allowed" setup to the existing parameter "Cause" in the RANAP: Iu Release Command performed when the connection is rejected are well known by those in the art, they do not directly relate to the present invention.

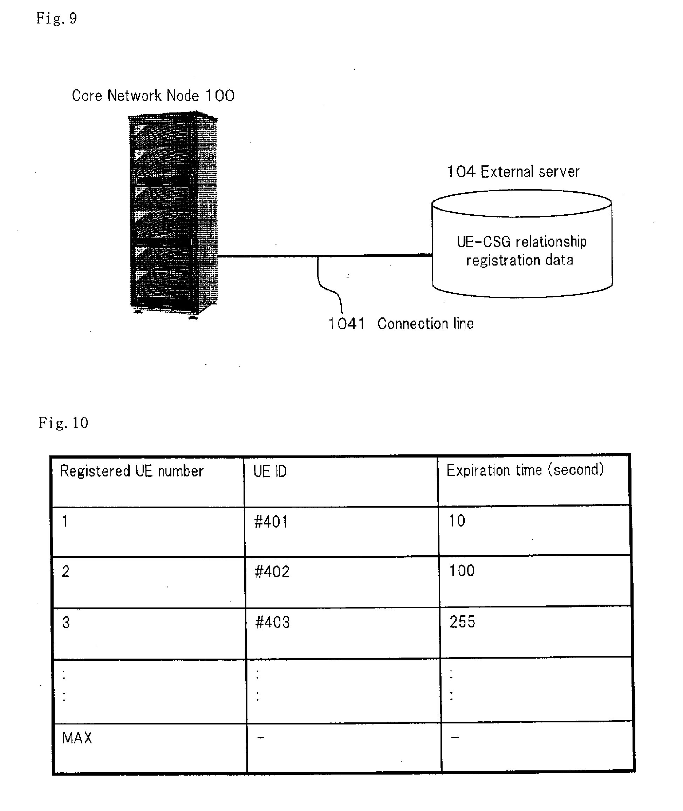

As shown in Fig. 9, UE-CSG relationship registration data 1005 may be stored in external server 104 connected to Core Network Node 100 and also Core Network Node 100 may manage whether to permit or reject the connection for UE 400 through connection line 1041 to external server 104.

In the case of this structure, external server 104 is inquired whether or not the CSG ID of the area to which UE 400 is connected has been registered in the Allowed CSG List. If the CSG ID of the area in which UE 400 is contained in the Allowed CSG List, external server 104 notifies Core Network Node 100 through connection line 1041 that the connection is permitted; if not, external server 104 notifies Core Network Node 100 through connection line 1041 that the connection is not permitted.

In Fig. 10, the detailed structures of UE black list registration memories 2005 and 3005 shown in Fig. 6 and Fig. 7 are described.

In each of UE black list registration memories 2005 and 3005, a list of UEs 400 that issue a connection request for a CSG that a user has manually selected and that need to be rejected are registered and expiration times are assigned to its individual entries. In addition, a maximum registrable entry number is assigned to the list. When the assigned expiration time runs out in each entry, the entry becomes invalid and is deleted from the UE black list memory. If UE 400 is registered in excess of the maximum registrable entry number, the oldest entry is deleted from the list.

In the following, the operation of the radio communication system shown in Fig. 4 will be described.

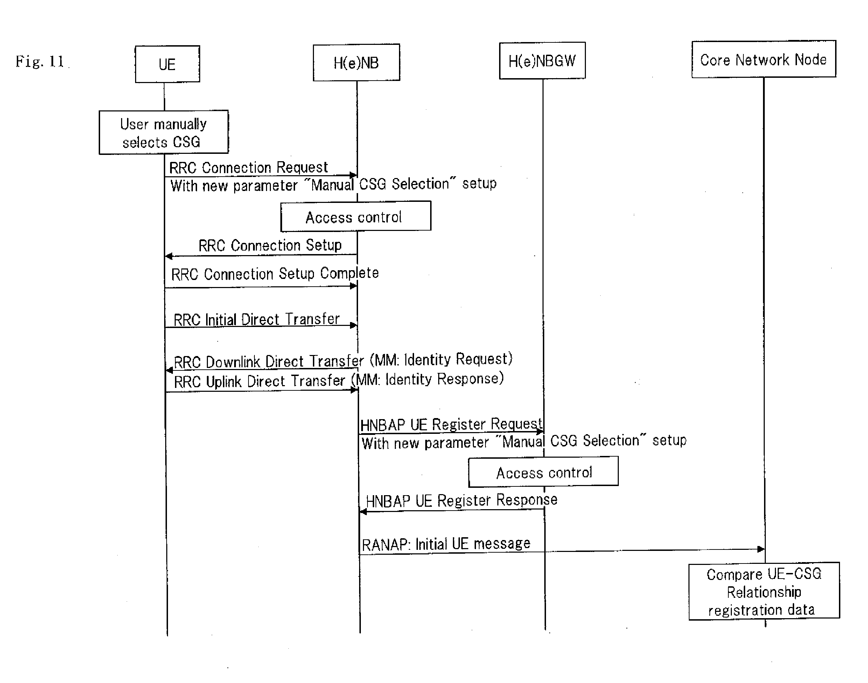

Fig. 11 shows the operation of a connection request manually selected by the user.

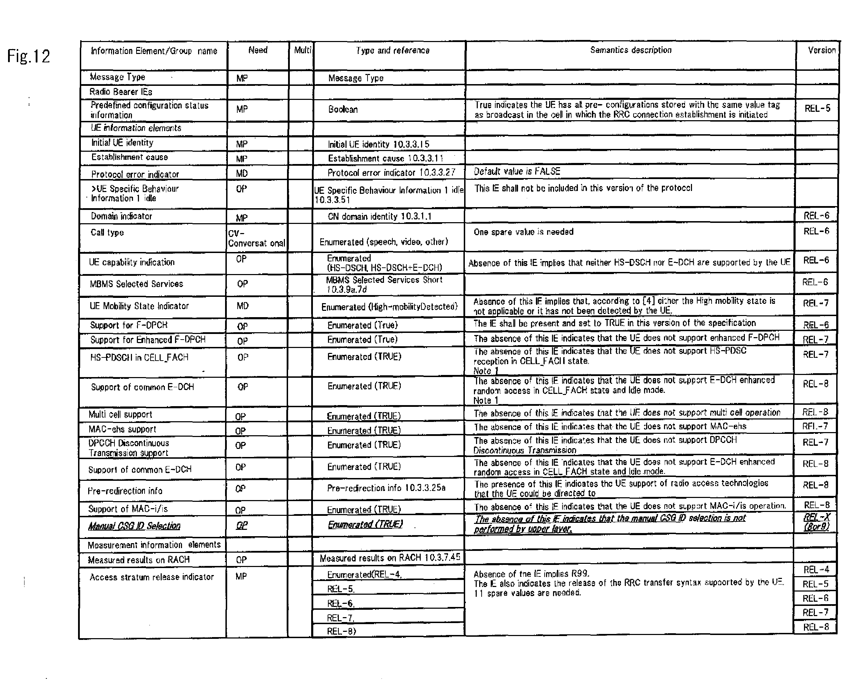

In Fig. 11, when the user manually selects a CSG and UE 400 issues a connection request for the CSG to the network, as one feature of the present invention, the new parameter "Manual CSG ID Selection" that denotes that the manual selection has been performed is set to the RRC Connection Request message that is transmitted from UE 400 to H(e)NB 300 (Fig. 12).

Thus, according to this embodiment, since the Indicator "Manual CSG ID Selection" that denotes that the manual selection has been performed is set to the RRC Connection Request message that is transmitted from UE 400 to H(e)NB 300, H(e)NB 300 can control UE 400 without performing the access control for UE 400 based on the permitted UE list and thereby does not reject access from UE 400, it can perform a UE Registration Procedure for H(e)NB GW 200 at the subsequent step.

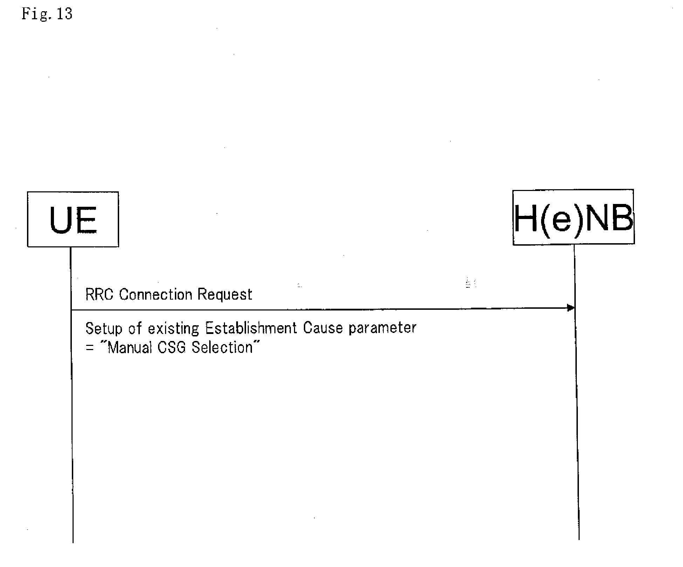

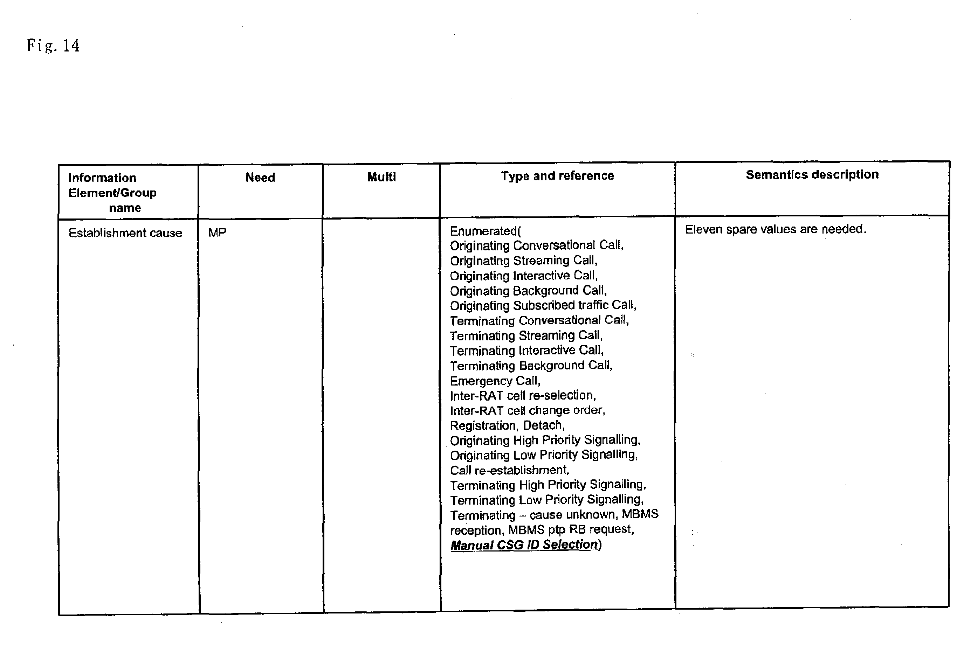

The notification that denotes that the manual selection has been performed can be accomplished by setting the new value "Manual CSG ID Selection" to the existing parameter "Establishment Cause" instead of the new parameter "Manual CSG ID Selection" that denotes that the manual selection has been performed in the above-described RRC Connection Request message (Fig. 13, Fig. 14).

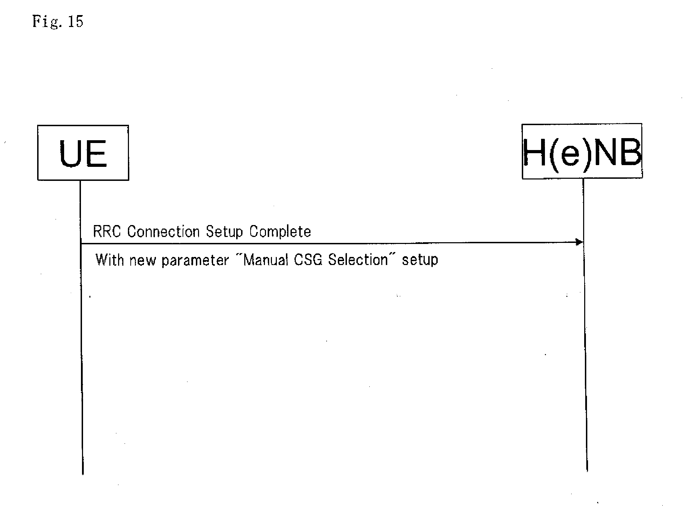

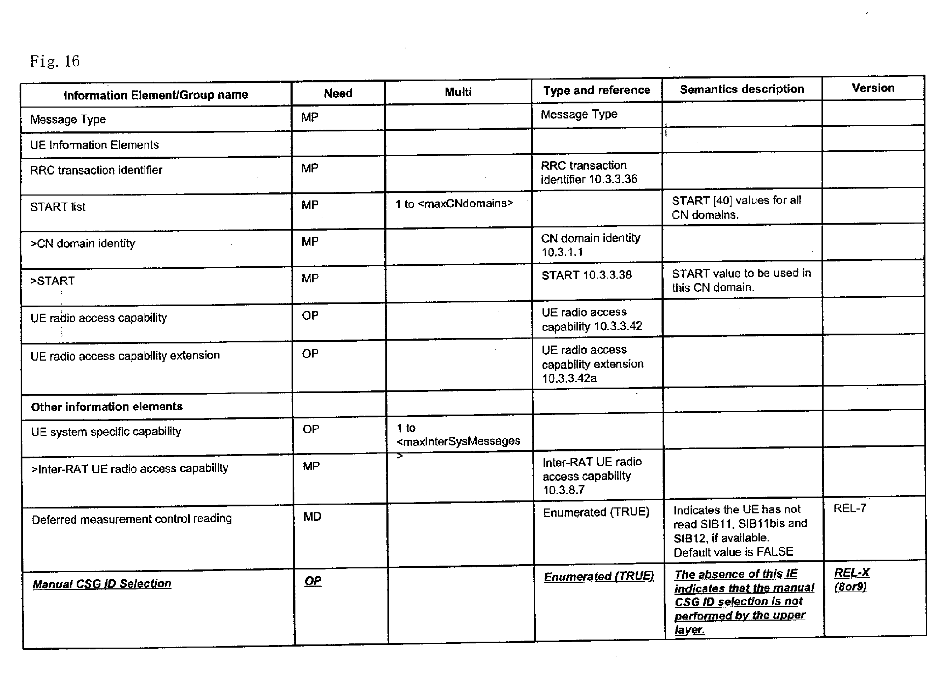

Alternatively, the notification that denotes that the manual selection has been performed can be accomplished by setting the new parameter "Manual CSG ID Selection" that denotes that the manual selection has been performed to an RRC Connection Setup Complete message that is transmitted instead of the above-described RRC Connection Request message (Fig. 15, Fig. 16).

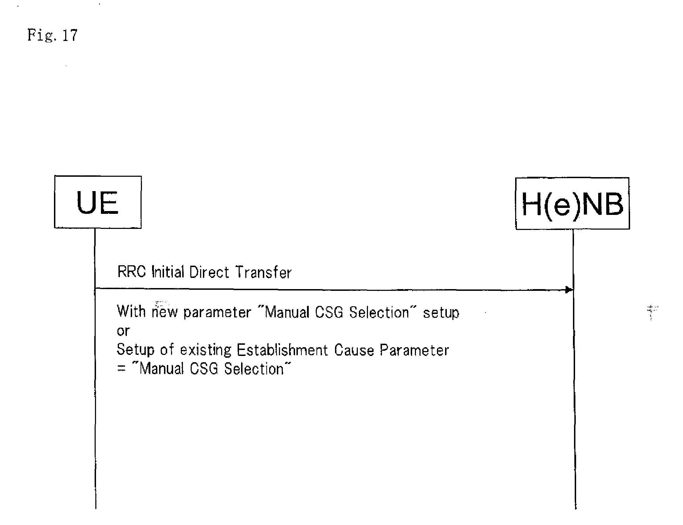

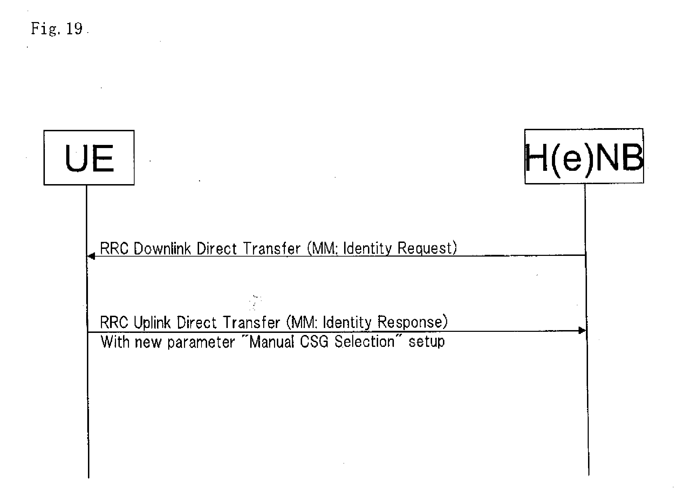

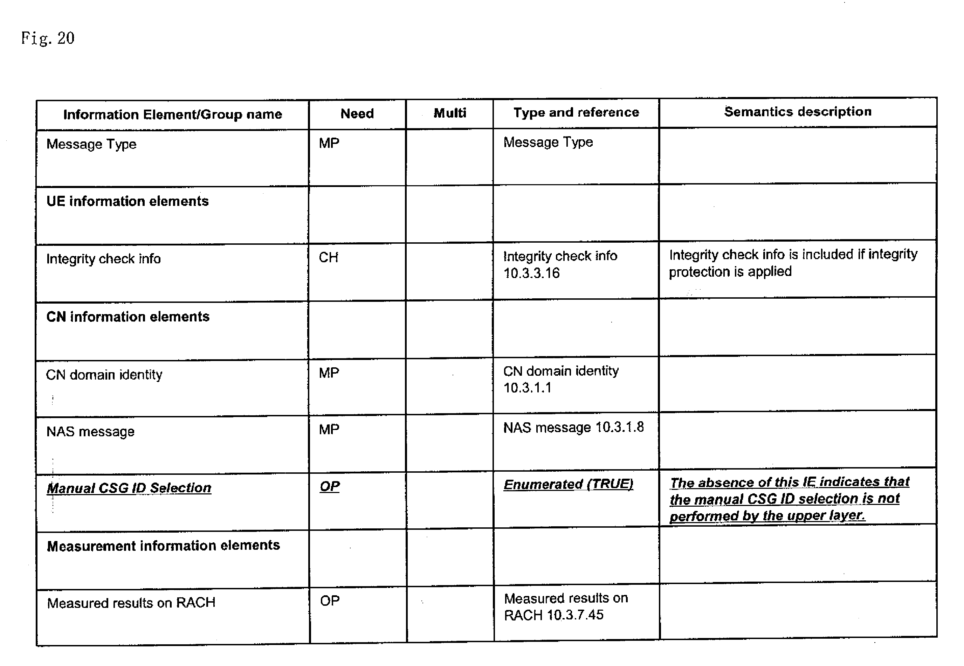

Alternatively, the notification that denotes that the manual selection has been performed can be accomplished by setting the new value "Manual CSG ID Selection" to the new parameter "Manual CSG ID Selection" that denotes that the manual selection has been performed or the existing parameter "Establishment Cause" to the RRC Initial Direct Transfer Message that is transmitted instead of the above-described RRC Connection Request message (Fig. 17, Fig. 18, Fig. 14).
Alternatively, the notification that denotes that the manual selection has been performed can be accomplished by setting the new parameter "Manual CSG ID Selection" that denotes that the manual selection has been performed to an RRC Uplink Direct Transfer (MM [Mobility Management]: Identity Response) that is transmitted instead of the above-described RRC Connection Request message (Fig. 19, Fig. 20).

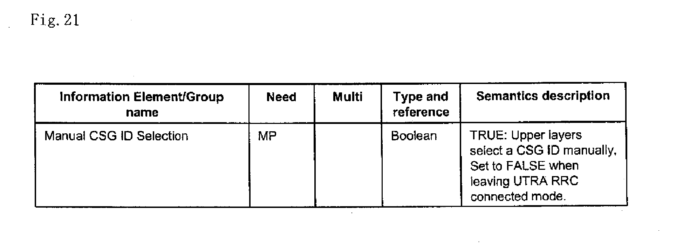

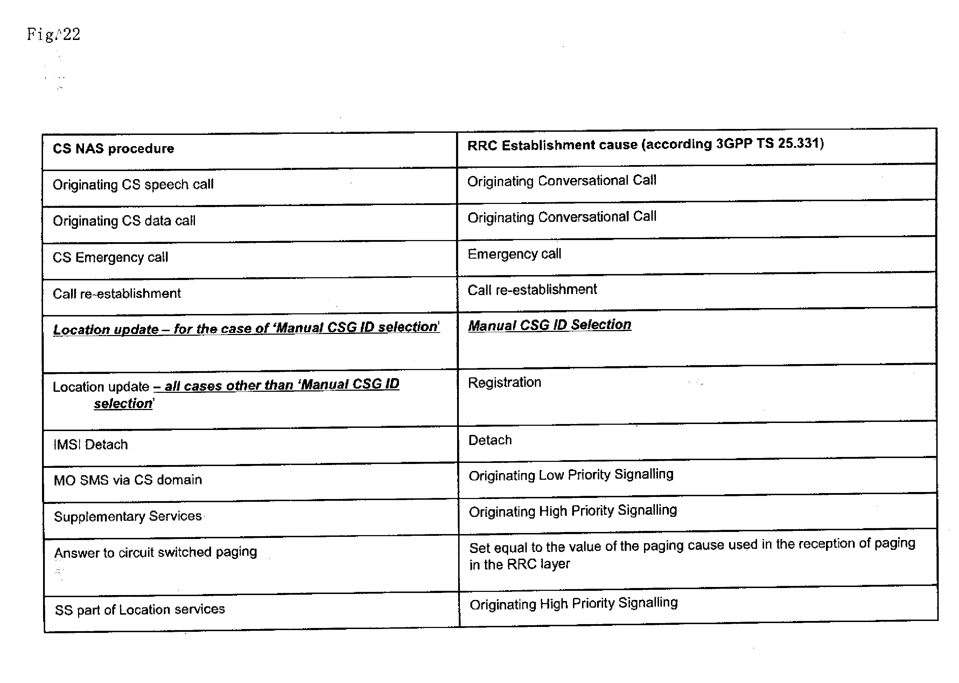

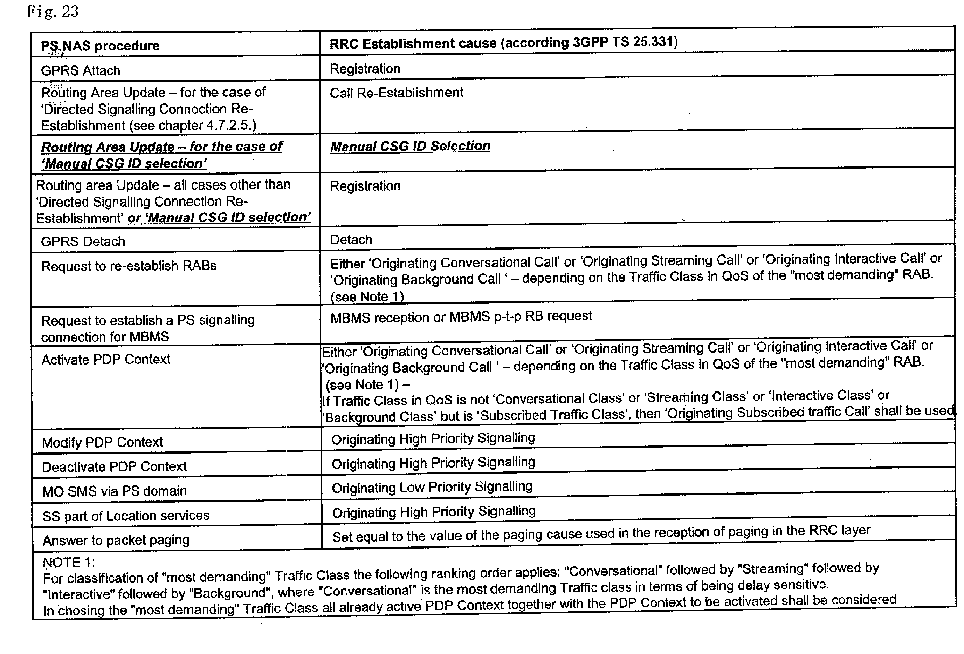

If the new parameter "Manual CSG ID Selection" that denotes that the manual selection has been performed is set to the above-described message, UE 400 performs setting as shown in Fig. 21. In contrast, if the new value "Manual CSG ID Selection is set to the existing parameter "Establishment Cause" in the above-described message, UE 400 performs setting as shown in Fig. 22 or Fig. 23.

In Fig. 11, when H(e)NB 300 performs the UE Registration Procedure for H(e)NB GW 200 and when as described above H(e)NB 300 knows that UE 400 has issued a connection request for a CSG that the user has manually selected, the Indicator "Manual CSG ID Selection" that denotes that the manual selection has been performed is set to the HNBAP: UE Register Request message that is transmitted to H(e)NB GW 200. Thus, H(e)NB 300 can control UE 400 without performing the access control based on the permitted UE list of H(e)NB GW 200.

Thus, according to this embodiment, since the Indicator "Manual CSG ID Selection" that denotes that the manual selection has been performed is set to the HNBAP: UE Register Request message transmitted from H(e)NB 300 to H(e)NB GW 200, H(e)NB 300 can control UE 400 without performing the access control based on the permitted UE list of H(e)NB GW 200.

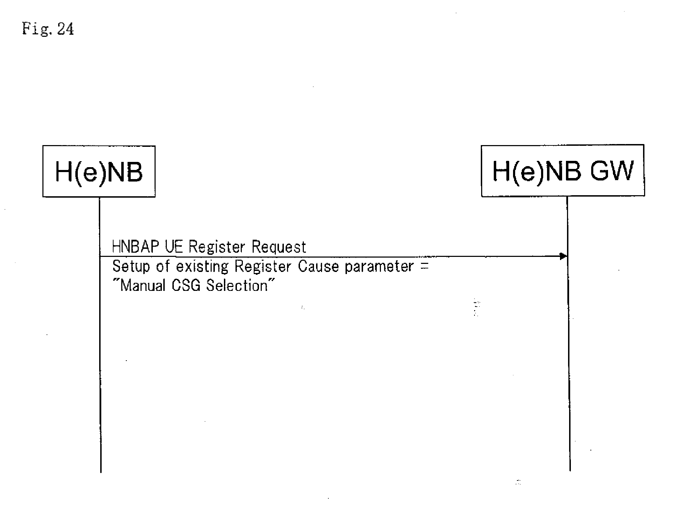

Alternatively, the notification that denotes that the manual selection has been performed can be accomplished by setting the new value "Manual CSG ID Selection" to the existing parameter "Register Cause" instead of the new parameter "Manual CSG ID Selection" that denotes that the manual election has been performed in the above-described HNBAP: UE Register Request message (Fig. 24).

Thereafter, UE 400 is connected to Core Network Node 100. Thus, Core Network Node 100 can perform the access control that determines whether or not the connection for a CSG selected on UE 400 is permitted.

In addition, according to this embodiment, since H(e)NB 300 performs the access control for a connection request issued from UE 400 that has illegality or installation mistake based on the UE black list, the load for the access control in H(e)NB GW 200 and the load for the access control in Core Network Node 100 can be decreased.

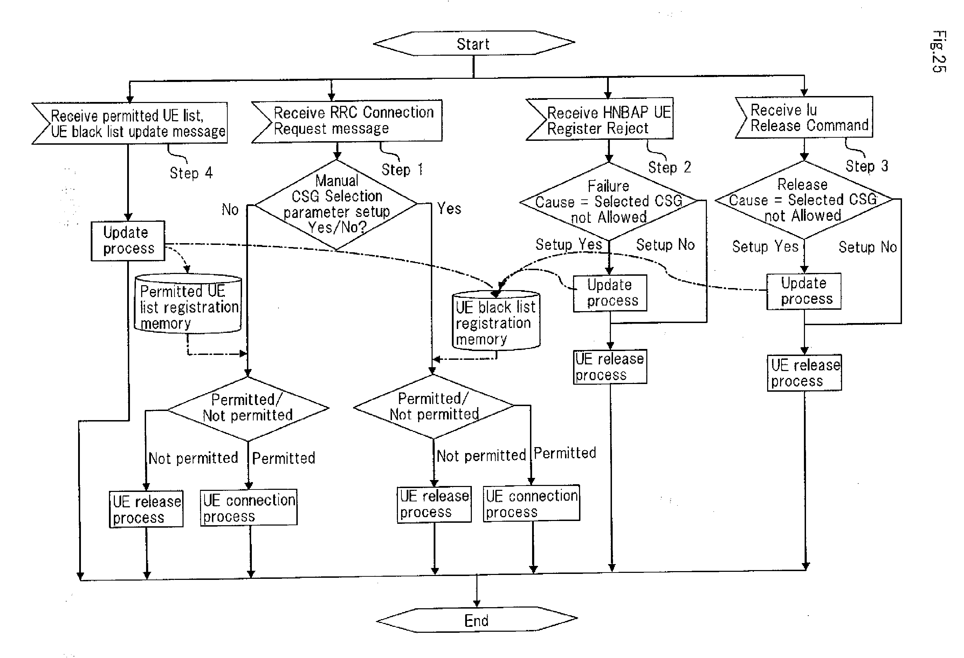

Fig. 25 shows the operation of the access control performed by H(e)NB 300 shown in Fig. 11.

At step 1 shown in Fig. 25, when H(e)NB 300 receives the RRC Connection Request message from UE 400, H(e)NB 300 performs the following process.
1) If the new parameter "Manual CSG ID Selection" has been set to the message, H(e)NB 300 compares UE 400 with the contents of UE black list registration memory 3006.
   1-1) If UE 400 has been registered in UE black list registration memory 3006, H(e)NB 300 rejects the connection for UE 400 and releases the resource.
   1-2) If UE 400 has not been registered in UE black list registration memory 3006, H(e)NB 300 permits the connection for UE 400 and continues the connection process.
2) If the new parameter "Manual CSG ID Selection" has not been set to the message, H(e)NB 300 compares UE 400 with the contents of permitted UE list registration memory.
   2-1) If UE 400 has not been registered in permitted UE list registration memory 3005, H(e)NB 300 rejects the connection for UE 400 and releases the resource.
   2-2) If UE 400 has been registered in permitted UE list registration memory 3005, H(e)NB 300 permits the connection for UE 400 and continues the connection process.

Even if the new parameter "Manual CSG ID Selection" that denotes that the manual selection has been performed has been set to the HNBAP: UE Register Request message received from H(e)NB 300, H(e)NB GW 200 can perform the access control for UE 400. For example, if UE 400 has been registered in UE black list registration memory 2006 in H(e)NB GW 200, H(e)NB 300 receives the HNBAP: UE Register Reject message from H(e)NB GW 200. The rejection reason at that point is a value that denotes that the CSG that has been selected based on Manual CSG ID Selection cannot be used (for example, Selected CSG not Allowed).

In this example, although H(e)NB GW 200 determines whether or not to permit the connection based on UE black list registration memory 2006, if H(e)NB GW 200 can use UE-CSG relationship registration data 1005, H(e)NB GW 200 can determine whether or not to permit the connection by determining whether or not UE-CSG relationship registration data 1005 permit the CSG to which UE 400 is connected.

At step 2 shown in Fig. 25, when H(e)NB 300 receives the HNBAP: UE Register Reject message from H(e)NB GW 200, H(e)NB 300 performs the following process.
1) If the rejection reason is Selected CSG not Allowed, H(e)NB 300 updates UE black list registration memory 3006 such that UE 400 is registered in UE black list registration memory 3006 and performs the release process for UE 400.
2) If the rejection reason is not Selected CSG not Allowed, H(e)NB 300 only performs the release process for UE 400.

At step 3 shown in Fig. 25, when H(e)NB 300 receives the RANAP: Iu Release Command from Core Network Node 100, H(e)NB 300 performs the following process.
1) If the Register Cause is a value that denotes that the CSG that has been selected based on Manual CSG ID Selection cannot be used (for example, Selected CSG not Allowed), H(e)NB 300 updates UE black list registration memory 3006 such that UE 400 is registered in UE black list registration memory 3006 and performs the release process for UE 400.
2) If the Register Cause is other than Selected CSG not Allowed, H(e)NB 300 only performs the release process for UE 400.

Thus, when H(e)NB 300 receives the HNBAP: UE Register Request message having rejection reason = Selected CSG not Allowed from H(e)NB GW 200 or the RANAP: Iu Release Command having Release Cause = Selected CSG not Allowed from Core Network Node 100, H(e)NB 300 appends UE 400 to UE black list registration memory 3006.

Thus, even if the Indicator "Manual CSG ID Selection" that denotes that the manual selection has been performed has been set to the RRC Connection Request message received from UE 400, H(e)NB 300 can validate the access control for UE 400, not invalidate it. Thus, since H(e)NB 300 performs the access control for the connection request from UE 400 that has illegality or installation mistake, the load for the access control in H(e)NB GW 200 and the load for the access control in Core Network Node 100 can be decreased.

According to this embodiment, although H(e)NB 300 is triggered to append UE 400 to UE black list registration memory 3006 when H(e)NB 300 receives the HNBAP: UE Register Request message having rejection reason = Selected CSG not Allowed from H(e)NB GW 200 or when H(e)NB 300 receives the RANAP: Iu Release Command having Register Cause = Selected CSG not Allowed from Core Network Node 100, H(e)NB 300 can append UE 400 to the black list based on the TR069 (that is an application layer protocol that serves to remotely manage end user devices).

In other words, if H(e)NB 300 receives an update message for permitted UE list registration memory 3005 or an update message for UE black list registration memory 3006 based on the TR069 at step 4 shown in Fig. 25, H(e)NB 300 updates permitted UE list registration memory 3005 or UE black list registration memory 3006, respectively.

In addition, according to this embodiment, since H(e)NB 300 performs the access control based on the UE black list, even if H(e)NB 300 performs the access control for the connection request from UE 400 that has illegality or installation mistake, the load for the access control in H(e)NB GW 200 and the load for the access control in Core Network Node 100 can be decreased.

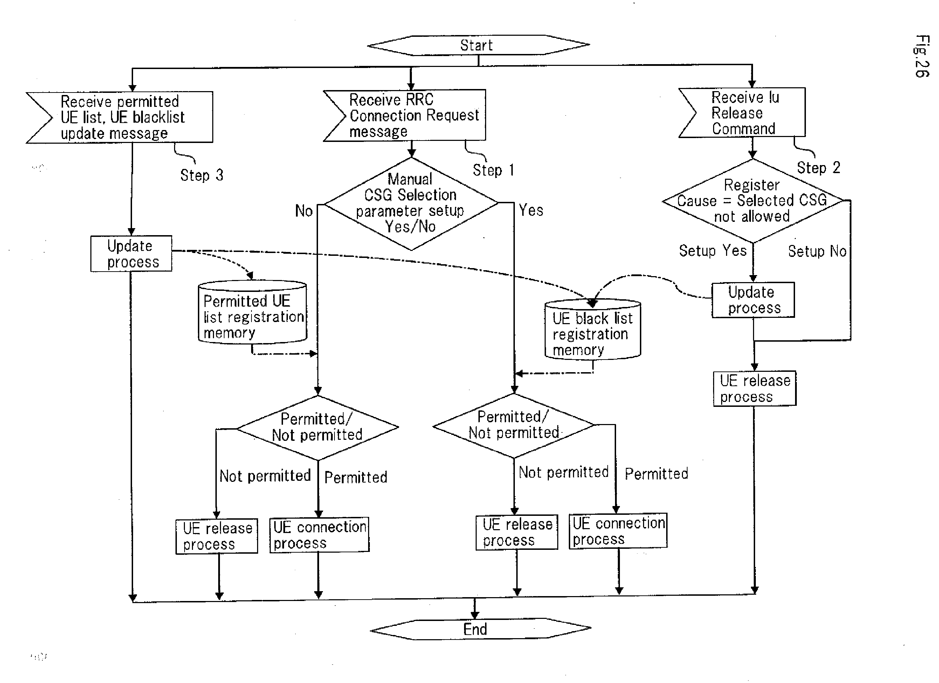

Fig. 26 shows the operation of the access control performed by H(e)NB GW 200 shown in Fig. 11.

At step 1 shown in Fig. 26, when H(e)NB GW 200 receives the HNBAP: UE Register Request message from UE 400, H(e)NB GW 200 performs the following process.
1) If the new parameter "Manual CSG ID Selection" is contained in the message, H(e)NB GW 200 compares UE 400 with the contents of UE black list registration memory 2006.
1-1) If UE 400 has been registered in UE black list registration memory 2006, H(e)NB GW 200 rejects the connection for UE 400 and releases the resource.
1-2) If UE 400 has not been registered in UE black list registration memory 2006, H(e)NB GW 200 permits the connection for UE 400 and continues the connection process.
2) If the new parameter "Manual CSG ID Selection" has not been set to the message, H(e)NB GW 200 compares UE 400 with the contents of permitted UE list registration memory 2005.

2-1) If UE 400 has not been registered in permitted UE list registration memory 2005, H(e)NB GW 200 rejects the connection for UE 400 and releases the resource.
2-2) If UE 400 has been registered in permitted UE list registration memory 2005, H(e)NB GW 200 permits the connection for UE 400 and continues the connection process.

Next, at step 2 shown in Fig. 26, when H(e)NB GW 200 receives the RANAP: Iu Release Command from Core Network Node 100, H(e)NB GW 200 performs the following process.
1) If the Register Cause is a value that denotes that the CSG selected based on Manual CSG ID Selection cannot be used (for example, Selected CSG not Allowed), H(e)NB GW 200 updates UE black list registration memory 2006 such that UE 400 is registered in UE black list registration memory 2006 and performs the release process for UE 400.
2) If the Register Cause is other than Selected CSG not Allowed, H(e)NB GW 200 only performs the release process for UE 400.

According to this embodiment, when H(e)NB GW 200 receives the RANAP: Iu Release Command having Register Cause = Selected CSG not Allowed from Core Network Node 100, H(e)NB GW 200 appends UE 400 to UE black list 2006.

Thus, even if the Indicator "Manual CSG Selection" that denotes that the manual selection has been performed has been set to the HNBAP: UE Register Request message received from UE 400, H(e)NB GW 200 can validate the access control for UE 400, not invalidate it. Thus, since H(e)NB GW 200 performs the access control for the connection request from UE 400 that has illegality or installation mistake, the load for the access control in Core Network Node 100 can be decreased.

According to this embodiment, although H(e)NB GW 200 is triggered to append an UE to the UE black list when H(e)NB GW 200 receives the RANAP: Iu Release Command having Register Cause = Selected CSG not Allowed from Core Network Node 100, H(e)NB GW 200 can register a UE to the black list based on the TR069 (that is an application layer protocol that serves to remotely manage end user devices). Likewise, H(e)NB GW 200 can register a UE to the permitted UE list registration memory by the similar means.

In other words, at step 3 shown in Fig. 26, if H(e)NB GW 200 receives an update message for permitted UE list registration memory 2005 or an update message for UE black list registration memory 2006 based on the TR069, H(e)NB GW 200 updates permitted UE list registration memory 2005 or UE black list registration memory 2006, respectively.

In addition, according to this embodiment, since the UE black lists used for the access control by H(e)NB 300 and H(e)NB GW 200 have expiration time, maximum registrable entry number, oldest UE deletion means in maximum UE number registration state, and newest UE registration means, the usage of the memories in H(e)NB 300 and H(e)NB GW 200 and the loads for the processes thereof can be decreased.

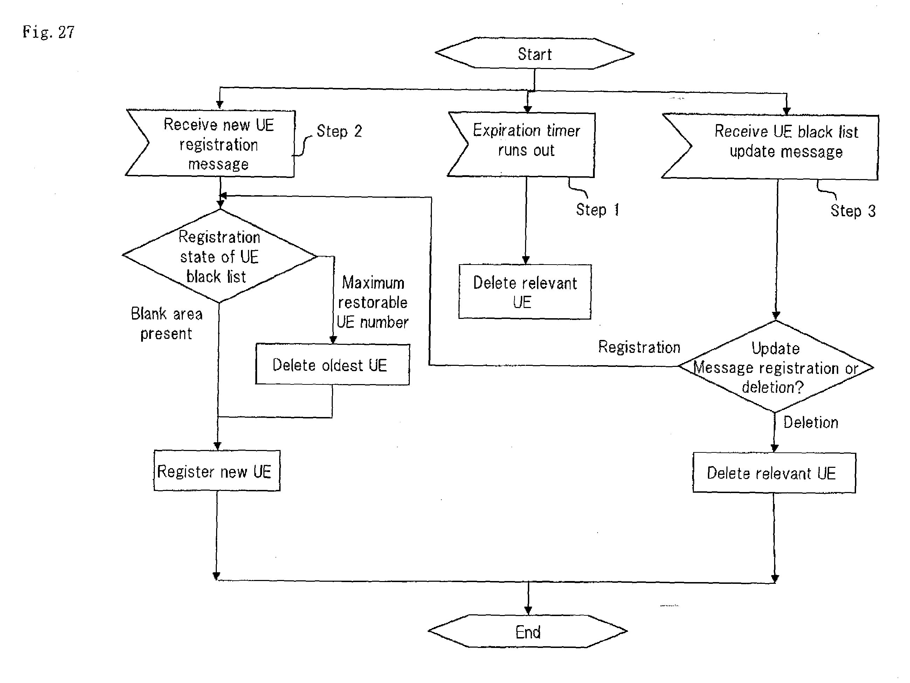

Fig. 27 shows the registration and deletion operations for the UE black lists in the H(e)NB and H(e)NB GW shown in Fig. 4.

In Fig. 27, the UE black lists in H(e)NB 300 and H(e)NB GW 200 are managed by timers that indicate expiration times at which individual UEs 400 are expired in the UE black lists.
1) When the timer corresponding to UE 400 runs out, it is deleted from the UE black list.

An upper limit that is the maximum registrable UE number has been set to each of the UE black lists.
2) When new UE 400 is registered, the following process is performed.
2-1) If UEs 400 of the maximum registrable number have not yet been registered in the UE black list, new UEs 400 are registered in blank areas of the UE black list.
2-2) If UEs 400 of the maximum registrable number have already been registered in the UE black list, UE 400 that is the oldest is deleted therefrom and UE 400 that is new is registered therein. For example, UE 400 having the least remaining time in the above-describe timer is deleted.

Thus, according to this embodiment, since the UE black lists in H(e)NB 300 and H(e)NB GW 200 each have the manageable number of UEs 400, expiration times of UEs 400, upper limit of registrable UE number, oldest UE deletion means in maximum UE number registration state, and newest UE registration means, the usage of the memories in H(e)NB 300 and H(e)NB GW 200 and the loads for the processes thereof can be decreased.

In this embodiment,
3) when a update message for the UE black list registration memory is received based on the TR069 (that is an application layer protocol that serves to remotely manage end user devices), some of UEs registered in the UE black list can be excluded.

Thus, according to this embodiment, since there is a means that externally updates the UE black lists in H(e)NB 300 and H(e)NB GW 200, if UE 400 that has a installation mistake is repaired later or if a user's manual selection that has a mistake is corrected later, unnecessarily registered UEs 400 can be deleted from the lists and thereby the usage of the memories of H(e)NB 300 and H(e)NB GW 200 and the loads for the processes thereof can be decreased.

In addition, according to this embodiment, the expiration timers can be stored as internal parameters in H(e)NB 300 and H(e)NB GW 200. However, the expiration timer value may be contained in the RANAP: Iu Release Command message having Register Cause = Selected CSG not Allowed received from Core Network Node 100, the HNBAP: UE Register Request message having rejection reason = Selected CSG not Allowed received from H(e)NB GW 200 in the case of H(e)NB 300, or the update messages for UE black list registration memories 3006 and 2006 received based on the TR069.

H(e)NB 300 that consists of femtocell 501 that broadcasts a CSG ID is accessed both by an authorized user of UE 400 that has the CSG ID registered in the Allowed CSG List and by a user who causes UE 400 to select the CSG ID based on Manual CSG ID Selection.

In an crowded area such as a shopping center, it is expected that since so many users select the CSG ID of femtocell 501, congestion occurs in the network side including H(e)NB 300, and thereby an authorized user is restricted from accessing H(e)NB 300.

Thus, according to this embodiment, when access is performed by the user who causes UE 400 to select the CSG ID based on Manual CSG ID Selection, when the parameter "Manual CSG ID Selection" that denotes that the user has selected a CSG ID and causes UE 400 to selects the CSG ID is set to the RRC Message or the value Manual CSG ID Selection is set to the Establishment Cause, H(e)NB 300 can identify the access by the user that causes UE 400 to select the CSG ID based on Manual CSG ID Selection and can perform the access control that rejects the connection against the connection request.

When an authorized user manually selects a CSG ID of H(e)NB 300 registered in the Allowed CSG List and accesses H(e)NB 300, if the parameter "Manual CSG ID Selection" is set or the value "Manual CSG ID Selection" is set to the Establishment Cause, it becomes difficult to distinguish access by the non-authorized user from the access by the authorized user.

Thus, when access is performed by the user who causes UE 400 to select the CSG ID not registered in the Allowed CSG List based on Manual CSG ID Selection, when a parameter "Manual CSG ID Selection2" that denotes that a non-authorized user has selected the CSG ID is set to the RRC Message or a value "Manual CSG ID Selection2" is set to the Establishment Cause, H(e)NB 300 can identify access by the non-authorized user who causes UE 400 to select the CSG ID based on Manual CSG ID Selection and can perform the access control that rejects the connection corresponding to the connection request from the non-authorized user.

### (Third Embodiment)

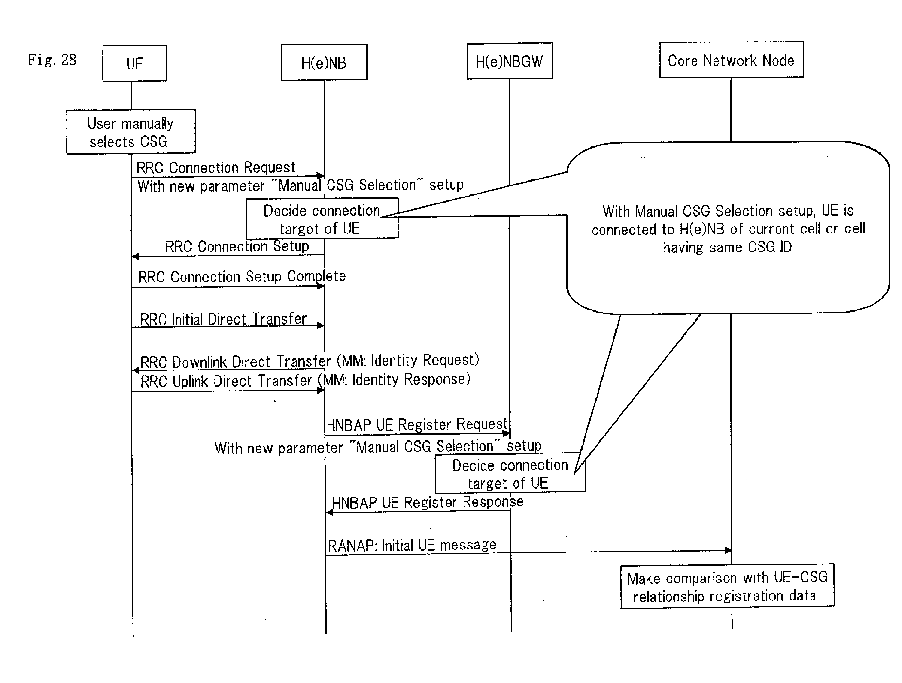

Although the structure of this embodiment is basically the same as that of the first embodiment, it is characterized in a reason for which H(e)NB 300 and H(e)NB GW 200 are notified that the user has manually selected a CSG and in an operation that is performed if the user has manually selected the CSG. The operation is shown in Fig. 28.

In Fig. 28, H(e)NB 300 and H(e)NB GW 200 of a radio communication system reconfigure a connection target for UE 400 connected thereto for reasons to manage the radio resource and network resource.

For example, it can be contemplated that H(e)NB 300 reconfigures a connection target for UE 400 so as to hand over UE 400 connected thereto to Node B 102 or eNB 103 or neighboring H(e)NB 300 because of insufficient radio resource or insufficient network resource.

Likewise, it can be contemplated that H(e)NB GW 200 reconfigures a connection target for UE 400 so as to hand over UE 400 connected thereto to Node B 102 or eNB 103 or H(e)NB 300 that belongs to another H(e)NB GW 200 for reasons of insufficient network resource or insufficient processing capacity.

However, if the user manually selects a CSG, UE 400 that is used by the user needs to be connected to H(e)NB 300 that belongs to the selected CSG. The reasons for doing this is to satisfy the objective of performing the update process for the Allowed CSG List of UE 400, for example, by connecting UE 400 to Core Network Node 100, to satisfy the objective of making communication at low cost in the selected CSG area, to satisfy the objective of performing a high speed data communication service in the selected CSG area, to satisfy the objective of obtaining information about the area of the selected CSG, and so forth.

According to this embodiment, to satisfy those objectives, information that denotes that the CSG has been manually selected by the user is added to a message in which UE 400 notifies H(e)NB 300 and to a message in which H(e)NB 300 notifies H(e)NB GW 200.

According to this embodiment, since the information that denotes that the CSG has been manually selected by the user is added to the message of which UE 400 notifies H(e)NB 300 and the message of which H(e)NB 300 notifies H(e)NB GW 200, H(e)NB 300 can connect UE 400 to the cell connected thereto or another cell that belongs to the same CSG.

As a result, an effect in which the objective of performing the update procedure for the Allowed CSG List of UE 400 by connecting UE 400 to Core Network Node 100, in which the objective of making communication at low cost in the selected CSG area, in which the objective of performing a high speed data communication service in the selected CSG area, in which the objective of obtaining information about the selected CSG area, and so forth are satisfied, can be obtained.

When UE 400 is reconnected, if it enters another cell, the target base station device (Target H(e)NB 301) can be notified of information that denotes that a CSG has been manually selected by the user in the following manner.
1) When UE 400 enters another cell, UE 400 reports information with respect to a femtocell that Target H(e)NB 301 comprises as an RRC: Measurement Report to a source base station device (Source H(e)NB 300). The information that UE 400 reports is, for example, radio quality information with respect to the femtocell that Target H(e)NB 301 comprises (relative robustness against noise and interpolation of power transmitted from the H(e)NB, reception intensity at the location of the UE of power transmitted from the H(e)NB, and attenuation of power transmitted from the H(e)NB to the UE).
2) Source H(e)NB 300 notifies H(e)NB GW 200 or the Core Network Node that is a higher node of Source H(e)NB 300 of a Relocation Required message. At this point, information that represents "manual selection has been performed" is set to a new parameter of the Relocation Required message or an RRC Container contained in the Relocation Required message.
3) H(e)NB GW 200 or the Core Network Node that is a higher node of H(e)NB GW 200 notifies Target H(e)NB 301 of a Relocation Request message. When the information that represents "manual selection has been performed" has been set to the Relocation Required message received from the Source H(e)NB, a new parameter that represents "manual selection has been performed" is set to the Relocation Request message. Alternatively, the information denoting that "manual selection has been selected" has been set to the RRC Container contained in the Relocation Request message and Target H(e)NB 300 is directly notified of the RRC Container received from Source H(e)NB 300.
4) Target H(e)NB 301 can recognize that the CSG has been "manually selected" for UE 400 and thereby that UE 400 has been connected to Target H(e)NB 301.

### (Fourth Embodiment)

The structure of this embodiment is basically the same as that of the first embodiment except that former is characterized by the operation that is performed when a macrocell is manually selected by the user.

Like the second embodiment, this embodiment is **characterized in that**, if the user manually selects a macrocell rather than a CSG, UE 400 notifies Node B 102, RNC 101, eNB 103, and Core Network Node 100 of information that denotes that the user has manually selected the macrocell.

Thus, according to this embodiment, since UE 400 notifies a network node of a macrocell that the macrocell has been manually selected by the user, the network node of the macrocell can reconnect UE 400 to the macrocell and thereby keep the connection for UE 400 with the network of the macrocell without the necessity of reconnecting UE 400 to the femtocell.

As a result, an effect in which the objective of continuing communication without necessity of user's payment for additional fee charged in the femtocell, in which the objective of providing the user who moves at high speed with a stable service through communication with a macrocell having a wide coverage are satisfied, can be obtained.

### (Fifth Embodiment)

This embodiment is applied to an IMS (IP Multimedia Subsystem) - Femto Architecture based radio communication system.

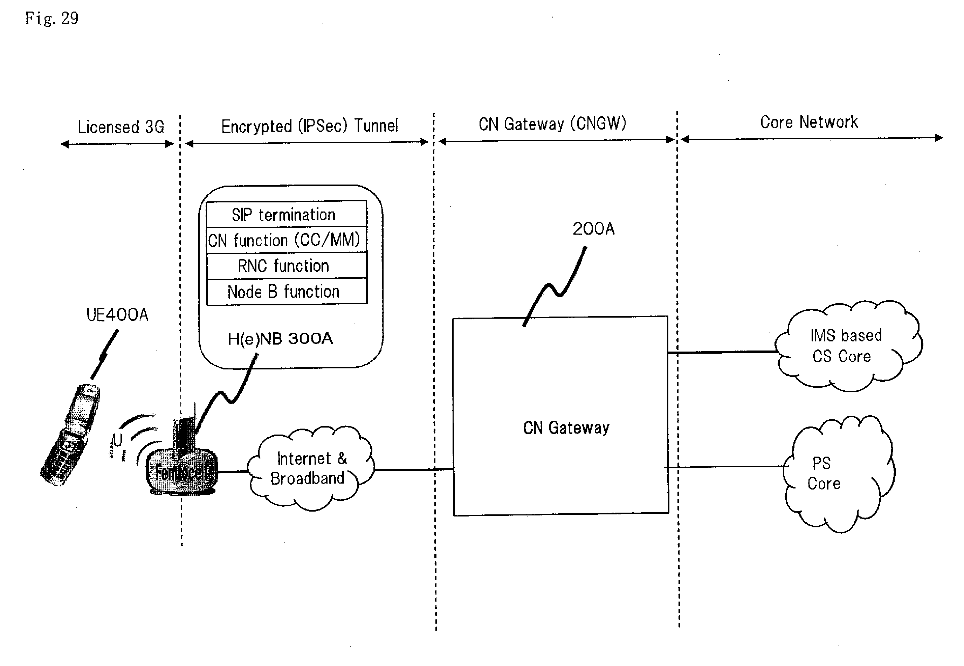

Referring to Fig. 29, the structure of the radio communication system according to this embodiment is presented.

In Fig. 29, the radio communication system includes CNGW 200A, H(e)NB 300A, and UE 400A.

Although this embodiment is the same as the first embodiment in messages exchanged among individual units, they differ only in the architecture on the network side.

In the above-described embodiments, radio communication systems such as femoto, LTE, and IMS were exemplified. However, the present invention is not limited to such systems, but can be applied to other radio communication systems having a radio communication terminal, a base station device, or a gateway.

In the above-described embodiments, the case in which the user selects one name, one closed subscriber group, or one macrocell assigned to a cell was described. However, the present invention is not limited to such systems, and the user may select two or more such names, closed subscriber groups, or macrocells. In this case, a UE may transmit the following types of information as "information that represents the selection of information with respect to a cell" to the base station device.
(1) Information that denotes that two or more such names, closed subscriber groups, or macrocells have been selected
(2) Identification information of a plurality of selected cells (cell identifiers or CSG IDs)
Radio communication systems such as femto, LTE, and IMS were exemplified. However, the present invention can be applied to other radio communication systems having a radio communication terminal and a base station device or a gateway.

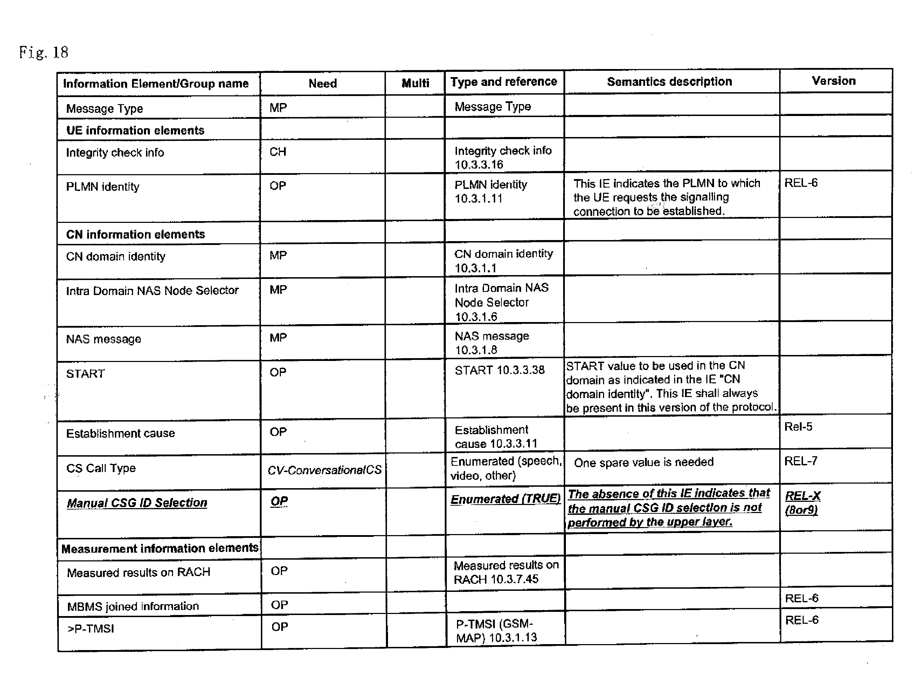

A program that causes a CPU disposed in each device to execute the processes represented by the flow charts shown in Figs. 11 and 18 includes a program according to the present invention. As a record medium that stores the program, a semiconductor storage unit, an optical and/or magnetic storage unit, or the like can be used. When such a program and a record medium are used in a system having a structure different from each of the above-described embodiments and the program is executed on the CPU, the substantially same effect as the present invention can be obtained.

Now, with reference to the embodiments, the present invention has been described. However, it should be understood by those skilled in the art that the structure and details of the present invention may be changed in various manners without departing from the spirit of the present invention.

The present application claims priority based on Japanese Patent Application JP 2009-061719 filed on March 13, 2009, the entire contents of which are incorporated herein by reference in its entirety.

## Claims

1. A radio communication system, comprising:
a base station device and a radio communication terminal,
wherein said radio communication terminal selects a cell of said base station device or a cell group to which the cell belongs, and
transmits information, that denotes that said cell or said cell group has been selected, to said base station device, and
wherein said base station device receives said information.

2. The radio communication system as set forth in claim 1,
wherein when said base station device decides a connection target of said radio communication terminal, said base station device decides the cell selected by the radio communication terminal, a cell that belongs to a same cell group as does the selected cell, or a cell that belongs to the cell group selected by the radio communication terminal as the connection target.

3. The radio communication system as set forth in claim 2,
wherein when said radio communication terminal issues a connection request to said base station device, said base station device does not perform an access control based on a permission list that contains radio communication terminals that are permitted to be connected to said base station device.

4. The radio communication system as set forth in claim 3,
wherein said base station device manages a black list that contains radio communication terminals that are rejected to be connected to said base station device, and
when said radio communication terminal issues the connection request to said base station device, said base station device performs an access control based on said black list.

5. The radio communication system as set forth in claim 4, further comprising:
a core network node that determines whether or not to reject said base station terminal if said base station device does not perform the access control based on the permission list and appends the radio communication terminal to the black list that said base station device manages if said core network node rejects said radio communication terminal.

6. The radio communication system as set forth in claim 5,
wherein an expiration time for said radio communication terminal is set to the black list that said base station device manages.

7. The radio communication system as set forth in claim 6,
wherein said expiration time is assigned by an upper node of said base station device.

8. The radio communication system as set forth in any one of claims 5 to 7,
wherein a maximum registrable number of said radio communication terminals is set to the black list that said base station device manages.

9. The radio communication system as set forth in claim 8,
wherein if a new radio communication terminal is registered in the black list in which said radio communication terminals of the maximum registrable number have been registered, the new radio communication terminal can be registered in the black list and an oldest radio communication terminal can be deleted therefrom.

10. The radio communication system as set forth in claim 1, further comprising:
a gateway device,
wherein said base station device transmits information, that denotes that said cell group or said cell has been selected, to said gateway device, and
wherein said gateway device receives said information.

11. The radio communication system as set forth in claim 10,
wherein when said base station device decides a connection target of said radio communication terminal, said gateway device decides the cell selected by the radio communication terminal, a cell that belongs to a same cell group as does the selected cell, or a cell that belongs to the cell group selected by the radio communication terminal as the connection target.

12. The radio communication system as set forth in claim 11,
wherein when said radio communication terminal issues a connection request to said gateway device, the gateway device does not perform an access control based on a permission list that contains radio communication terminals that are permitted to communicate with the gateway device.

13. The radio communication system as set forth in claim 12,
wherein said gateway device manages a black list that contains radio communication terminals that are rejected to be connected to the gateway device, and
when the radio communication terminal issues the connection request to the gateway device, said gateway device performs an access control based on said black list.

14. The radio communication system as set forth in claim 13, further comprising:
a core network node that determines whether or not to reject said radio communication terminal to be connected to said gateway device if said gateway device does not perform the access control based on the permission list and appends the radio communication terminal to the black list that said gateway device manages if said core network node rejects said radio communication terminal.

15. The radio communication system as set forth in claim 14,
wherein an expiration time for said radio communication terminal is set to the black list that said gateway device manages.

16. The radio communication system as set forth in claim 15,
wherein said expiration time is assigned by an upper node of said gateway device.

17. The radio communication system as set forth in any one of claims 14 to 16,
wherein a maximum registrable number of said radio communication terminals is set to the black list that said gateway device manages.

18. The radio communication system as set forth in claim 17,
wherein if a new radio communication terminal is registered in the black list in which said radio communication terminals of the maximum registrable number have been registered, the new radio communication terminal can be registered in the black list and an oldest radio communication terminal can be deleted therefrom.

19. The radio communication system as set forth in claim 1,
wherein said base station device
receives information that denotes that a macrocell has been selected from said radio communication terminal, and
decides a macrocell selected by the radio communication terminal or a macro cell that neighbors said selected macrocell as a connection target of said radio communication terminal.

20. The radio communication system as set forth in claim 1, further comprising:
a base station control device,
wherein said base station device receives information that denotes that a macrocell has been selected from said radio communication terminal and transmits said information to said base station control device, and
wherein said base station control device receives said information.

21. The radio communication system as set forth in claim 20,
wherein said base station device decides a macrocell selected by the radio communication terminal or a macrocell that neighbors said selected macrocell as a connection target of said radio communication terminal.

22. A base station device, comprising:
a reception unit that receives information that denotes that a cell of said base station device or a cell group to which said cell belongs has been selected by a radio communication terminal therefrom.

23. A radio communication terminal, comprising:
a selection unit that selects a cell of a base station device or a cell group to which said cell belongs; and
a transmission unit that transmits information, that denotes that said cell or said cell group has been selected, to said base station device.

24. A gateway device, comprising:
a reception unit that receives information that denotes that a cell of a base station device or a cell group to which said cell belongs has been selected by a radio communication terminal therefrom.

25. A communication method of a radio communication system having a base station device and a radio communication terminal, comprising:
causing said radio communication terminal to select a cell of said base station device or a cell group to which the cell belongs;
causing said radio communication terminal to transmit information that denotes that said cell or said cell group has been selected to said base station device; and
causing said base station device to receive said information.

26. A communication method of a base station device, comprising:
receiving information that denotes that a cell of said base station device or a cell group to which said cell belongs has been selected by a radio communication terminal therefrom.

27. A communication method of a radio communication terminal, comprising:
selecting a cell of a base station device or a cell group to which said cell belongs; and
transmitting information that denotes that said cell or said cell group has been selected to said base station device.

28. A communication method of a gateway device, comprising:
receiving information that denotes that a cell of a base station device or a cell group to which said cell belongs has been selected by a radio communication terminal therefrom.

## Amended claims

Statement under Art. 19.1 PCT
**1.** Amended) A radio communication system, comprising:
a base station device and a radio communication terminal,
wherein said radio communication terminal selects a cell of said base station device or a cell group to which the cell belongs through a user's selection unit, and
transmits information, that denotes that said cell or said cell group has been selected through said user's selection unit, to said base station device, and
wherein said base station device receives said information.

**2.** Amended) The radio communication system as set forth in claim 1,
 wherein when said base station device decides a connection target of said radio communication terminal, said base station device decides the cell selected through said user's selection unit by the radio communication terminal, a cell that belongs to a same cell group as does the selected cell, or a cell that belongs to the cell group selected through said user's selection unit by the radio communication terminal as the connection target.

**3.** Amended) The radio communication system as set forth in claim 2,
 wherein when said radio communication terminal issues a connection request to the cell or the cell group selected through said user's selection unit, said base station device does not perform an access control based on a permission list that contains radio communication terminals that are permitted to be connected to said base station device.

**4.** Amended) The radio communication system as set forth in claim 3,
 wherein said base station device manages a black list that contains radio communication terminals that are rejected to be connected to said base station device, and
 when said radio communication terminal issues the connection request to the cell or the cell group selected through said user's selection unit, said base station device performs an access control based on said black list.

**5.** The radio communication system as set forth in claim 4, further comprising:
a core network node that determines whether or not to reject said base station terminal if said base station device does not perform the access control based on the permission list and appends the radio communication terminal to the black list that said base station device manages if said core network node rejects said radio communication terminal.

**6.** The radio communication system as set forth in claim 5,
 wherein an expiration time for said radio communication terminal is set to the black list that said base station device manages.

**7.** The radio communication system as set forth in claim 6,
 wherein said expiration time is assigned by an upper node of said base station device.

**8.** The radio communication system as set forth in any one of claims 5 to 7,
 wherein a maximum registrable number of said radio communication terminals is set to the black list that said base station device manages.

**9.** The radio communication system as set forth in claim 8,
 wherein if a new radio communication terminal is registered in the black list in which said radio communication terminals of the maximum registrable number have been registered, the new radio communication terminal can be registered in the black list and an oldest radio communication terminal can be deleted therefrom.

**10.** Amended) The radio communication system as set forth in claim 1, further comprising:
a gateway device,
wherein said base station device transmits information that denotes that said cell group or said cell has been selected through said user's selection unit by said radio communication terminal to said gateway device, and
wherein said gateway device receives said information.

**11.** Amended) The radio communication system as set forth in claim 10,
 wherein when said base station device decides a connection target of said radio communication terminal, said gateway device decides the cell selected through said user's selection unit by the radio communication terminal, a cell that belongs to a same cell group as does the selected cell, or a cell that belongs to the cell group selected through said user's selection unit by the radio communication terminal as the connection target.

**12.** Amended) The radio communication system as set forth in claim 11,
 wherein when said radio communication terminal issues a connection request to the cell or the cell group selected through said user's selection unit, the gateway device does not perform an access control based on a permission list that contains radio communication terminals that are permitted to communicate with the gateway device.

**13.** Amended) The radio communication system as set forth in claim 12,
 wherein said gateway device manages a black list that contains radio communication terminals that are rejected to be connected to the gateway device, and
 when the radio communication terminal issues the connection request to the cell or the cell group selected through said user's selection unit, said gateway device performs an access control based on said black list.

**14.** The radio communication system as set forth in claim 13, further comprising:
a core network node that determines whether or not to reject said radio communication terminal to be connected to said gateway device if said gateway device does not perform the access control based on the permission list and appends the radio communication terminal to the black list that said gateway device manages if said core network node rejects said radio communication terminal.

**15.** The radio communication system as set forth in claim 14,
 wherein an expiration time for said radio communication terminal is set to the black list that said gateway device manages.

**16.** The radio communication system as set forth in claim 15,
 wherein said expiration time is assigned by an upper node of said gateway device.

**17.** The radio communication system as set forth in any one of claims 14 to 16,
 wherein a maximum registrable number of said radio communication terminals is set to the black list that said gateway device manages.

**18.** The radio communication system as set forth in claim 17,
 wherein if a new radio communication terminal is registered in the black list in which said radio communication terminals of the maximum registrable number have been registered, the new radio communication terminal can be registered in the black list and an oldest radio communication terminal can be deleted therefrom.

**19.** Amended) The radio communication system as set forth in claim 1,
 wherein said base station device
 receives information that denotes that a macrocell has been selected through said user's selection unit by said radio communication terminal from said radio communication terminal, and
 decides a macrocell selected through said user's selection unit by the radio communication terminal or a macrocell that neighbors said selected macrocell as a connection target of said radio communication terminal.

**20.** Amended) The radio communication system as set forth in claim 1, further comprising:
a base station control device,
wherein said base station device receives information that denotes that a macrocell has been selected through said user's selection unit by said radio communication terminal from said radio communication terminal and transmits said information to said base station control device, and
wherein said base station control device receives said information.

**21.** Amended) The radio communication system as set forth in claim 20,
 wherein said base station device decides a macrocell selected through said user's selection unit by the radio communication terminal or a macrocell that neighbors said selected macrocell as a connection target of said radio communication terminal.

**22.** Amended) A base station device, comprising:
a reception unit that receives information that denotes that a cell of said base station device or a cell group to which said cell belongs has been selected through a user's selection unit by a radio communication terminal therefrom.

**23.** Amended) A radio communication terminal, comprising:
a selection unit that selects a cell of a base station device or a cell group to which said cell belongs; and a transmission unit that transmits information, that denotes that said cell or said cell group has been selected through said user's selection unit, to said base station device.

**24.** Amended) A gateway device, comprising:
a reception unit that receives information that denotes that a cell of a base station device or a cell group to which said cell belongs has been selected through a user's selection unit by a radio communication terminal therefrom.

**25.** Amended) A communication method of a radio communication system having a base station device and a radio communication terminal, comprising:
causing said radio communication terminal to select a cell of said base station device or a cell group to which the cell belongs through a user's selection unit;
causing said radio communication terminal to transmit information that denotes that said cell or said cell group has been selected through said user's selection unit to said base station device; and
causing said base station device to receive said information.

**26.** Amended) A communication method of a base station device, comprising:
receiving information that denotes that a cell of said base station device or a cell group to which said cell belongs has been selected through a user's selection unit by a radio communication terminal therefrom.

**27.** Amended) A communication method of a radio communication terminal, comprising:
selecting a cell of a base station device or a cell group to which said cell belongs through a user's selection unit; and
transmitting information that denotes that said cell or said cell group has been selected through said user's selection unit to said base station device.

**28.** Amended) A communication method of a gateway device, comprising:
receiving information that denotes that a cell of a base station device or a cell group to which said cell belongs has been selected through a user's selection unit by a radio communication terminal therefrom.
